# EUROPEAN PATENT APPLICATION

(11) **EP 4 328 077 A1**
(43) Date of publication of application: **28.02.2024**
(21) Application number: 23169865.5
(22) Date of filing: 25.04.2023
(51) Int. Cl.: B60L 53/16, B60L 53/35, A01D 101/00

(54) **ROBOTIC TOOL AND CHARGING STATION**

(30) Priority: 25.04.2022 US 202263334467 P; 03.10.2022 US 202263412800 P
(71) Applicant: Techtronic Cordless GP, Anderson, SC 29621 (US)
(72) Inventor: JEFFRIES, Carl, Harlow, SL7 1YL (GB); MCGUINNESS, Neil, Harlow, SL7 1YL (GB); LAI, Hok Sum Sam, Kwai Chung (CN); CHOI, Man Ho, Kwai Chung (CN); NG, Ho Lam, Kwai Chung (CN); LI, Shing Hin, Kwai Chung (CN); LEE, Wai Chung, Kwai Chung (CN); WONG, Kar Tat, Kwai Chung (CN); LEE, Hei Man, Kwai Chung (CN)
(74) Representative: Zimmermann & Partner Patentanwälte mbB

(57) **Abstract**

A charging station for use with a robotic tool, the charging station including a core having a first end and a second end, the first end of the core being configured to be supported on a support surface and the core defining a core axis. The charging station also including a charging terminal coupled to the core, where the charging terminal includes a disk-shaped body extending radially outwardly from the core, where the charging terminal includes a lateral plane subdividing the body into a first sub-section and a second sub-section, and where a positive electrode is positioned on an exterior surface of the first sub-section and where a ground electrode is positioned on an exterior surface of the second sub-section.

## Description

### CROSS-REFERENCE TO RELATED APPLICATIONS

This application claims priority to prior-filed, co-pending U.S. Provisional Patent Application No. 63/334,467 filed on April 25, 2022, and co-pending U.S. Provisional Patent Application No. 63/412,800 filed October 3, 2022. The entire contents of both is hereby incorporated by reference.

### FIELD OF THE INVENTION

The embodiments described herein related to a robotic tool, and more specifically to a charging station for use with the robotic tool.

### BACKGROUND OF THE INVENTION

Robot tools are typically used with some form of charging station to allow the tool to recharge any internal batteries from time to time.

### SUMMARY

In one aspect, a charging station for use with a robotic tool, the charging station including a core, and a terminal coupled to the core and configured to form an electrical connection with the robotic tool, where the terminal defines an approach envelope extending over a pre-determined angular width, and where terminal is configured so that the robotic tool can approach the terminal along any approach vector falling within the approach envelope and form an electrical connection therewith.

Alternatively or additionally, in any combination, where the approach envelope has a pre-determined angular width of 360 degrees.

Alternatively or additionally, in any combination, where the approach envelope has a pre-determined angular width of 180 degrees.

Alternatively or additionally, in any combination, where the approach envelope of the terminal is a first approach envelope, and where the terminal includes a second approach envelope extending over a second pre-determined angular width distinct from the pre-determined angular width of the first approach envelope.

Alternatively or additionally, in any combination, where the pre-determined angular width is adjustable.

Alternatively or additionally, in any combination, where the terminal includes a positive electrode and a ground electrode electrically isolated from the positive electrode.

Alternatively or additionally, in any combination, where the terminal includes a first conductive layer producing a first outer surface, a second conductive layer producing a second outer surface, and a third insulating layer positioned between the first layer and the second layer.

Alternatively or additionally, in any combination, where one of the first layer and the second layer is a positive electrode and wherein the other of the first layer and the second layer is a ground electrode.

In another aspect, a charging station for use with a robotic tool, the charging station including a core having a first end and a second end, the first end of the core being configured to be supported on a support surface and the core defining a core axis. The charging station also including a charging terminal coupled to the core, where the charging terminal includes a disk-shaped body extending radially outwardly from the core, where the charging terminal includes a lateral plane subdividing the body into a first sub-section and a second sub-section, and where a positive electrode is positioned on an exterior surface of the first sub-section and where a ground electrode is positioned on an exterior surface of the second sub-section.

Alternatively or additionally, in any combination, where the charging terminal defines a terminal axis oriented normal to the lateral plane, and wherein the charging terminal includes a plurality of axially stacked portions.

Alternatively or additionally, in any combination, where the charging terminal includes a portion forming a bottom surface, a second portion forming a top surface, and a third portion positioned axially between the first portion and the second portion.

Alternatively or additionally, in any combination, where the first sub-section forms the top surface and where the second sub-section forms the bottom surface.

Alternatively or additionally, in any combination, where the first portion and the second portion are formed from a conductive material, and where the third portion is formed from an insulating material.

Alternatively or additionally, in any combination, where the charging terminal defines a terminal axis oriented normal to the lateral plane, and where the charging terminal includes a plurality of radially nested portions.

Alternatively or additionally, in any combination, where the charging terminal defines a terminal axis oriented normal to the lateral plane, and where the charging terminal includes a first portion forming a top surface, a second portion forming a bottom surface, and a third portion positioned radially between the first portion and the second portion.

Alternatively or additionally, in any combination, where the first portion and the second portion are formed from conductive material, and where the third portion is formed form an insulating material.

Alternatively or additionally, in any combination, where the first portion includes an insulating coating applied to the bottom surface thereof and wherein the second portion includes an insulating coating applied to the top surface thereof.

In another aspect, a robotic tool including a body having a periphery, one or more driven wheels mounted to the body, a working tool mounted to the body, a battery, and a charging port. The charging port including an elongated channel having an open end open to the exterior of the body, the channel defining a channel axis positioned at the cross-sectional center thereof and extending along the entire length of the channel, a positive electrode at least partially positioned within the channel, a ground electrode at least partially positioned within the channel, and where the channel axis is curvilinear.

Alternatively or additionally, in any combination, where the channel axis corresponds to the shape of at least a portion of the periphery of the body.

Alternatively or additionally, in any combination, where the body includes a front end, a rear end opposite the front end, and a pair of side ends extending between the front end and the rear end, and wherein the channel axis extends along at least the front end and a portion of at least one side end of the pair of side ends.

Alternatively or additionally, in any combination, where the cross-sectional layout of the charging port is constant along the entire axial length thereof.

Alternatively or additionally, in any combination, where the open end of the charging port is positioned at a constant vertical charger height along the entire axial length of the channel.

Alternatively or additionally, in any combination, where the working tool is a rotating blade.

In another aspect, a robotic tool kit, including a charging station including a core, and a charging terminal coupled to the core, where the charging terminal includes a positive electrode and a ground electrode. The robotic kit also including a robotic garden tool including a body having a periphery, at least one driven wheel mounted to the body, a battery, and a charging port including an elongated channel having an open end extending along and open to the periphery of the body, where the charging port includes a positive electrode at least partially positioned within the channel and a ground electrode at least partially positioned within the channel, and where the charging terminal is configured so that the charging terminal can be inserted anywhere along the length of the channel and still cause the positive electrode of the charging terminal to be in electrical communication with the positive electrode of the charging port and the ground electrode of the charging terminal be in electrical communication with the ground electrode of the charging port.

Alternatively or additionally, in any combination, where the charging terminal includes a top surface and a bottom surface, and where one of the top surface and the bottom surface forms the positive electrode and the other of the bottom surface and the top surface forms the ground electrode.

Alternatively or additionally, in any combination, where the charging terminal is configured so that the charging terminal can cause the positive electrode of the charging terminal to be in electrical communication with the positive electrode of the charging port and the ground electrode of the charging terminal be in electrical communication with the ground electrode of the charging port regardless of the relative angular orientations of the charging station and the robotic garden tool.

Alternatively or additionally, in any combination, where the charging terminal is positioned a first distance from the support surface, wherein the charging port is positioned a second distance from the support surface, and wherein the first distance is the same as the second distance.

Alternatively or additionally, in any combination, where the open end of the charging port is positioned a second distance from the support surface along the channel's entire axial length.

In still another aspect, a charging station for use with a robotic tool, the charging station including a core having a first end and a second end opposite the first end, the core defining a core axis therethrough, and a charging terminal coupled to the core, where the charging terminal includes a positive electrode and a negative electrode, where the charging terminal is positioned at a terminal height from a support surface, the charging terminal allows access over 360 degrees.

Alternatively or additionally, in any combination, further comprising a docking pad, and wherein the first end of the core is coupled to the docking pad.

Alternatively or additionally, in any combination, where the core includes a first threaded region located proximate to the first end of the core, wherein the docking pad includes a second threaded region, and where the first threaded region is configured to engage with the second threaded region.

Alternatively or additionally, in any combination, where the charging terminal is fixedly coupled to the core.

Alternatively or additionally, in any combination, where the core includes a first threaded region.

Alternatively or additionally, in any combination, where the core includes first threaded region located proximate to the second end of the core, wherein the charging terminal includes a second threaded region, and where the first threaded region is configured to engage with the second threaded region.

Alternatively or additionally, in any combination, where the first end of the core is positioned proximate the support surface.

Alternatively or additionally, in any combination, where the core further includes an automatic adjustment mechanism configured to move the charging terminal with respect to the support surface.

Alternatively or additionally, in any combination, where the automatic adjustment mechanism includes an electric motor and a controller in operable communication with the electric motor.

Alternatively or additionally, in any combination, further comprising a user interface and a station controller in communication with the charging terminal.

Alternatively or additionally, in any combination, where the user interface includes a first button configured to increase the terminal height and a second button configured to decrease the terminal height.

In still another aspect, a robotic tool including a body having a periphery, one or more wheels mounted to the body, a working tool mounted to the body, a battery, and a charging port. Where the charging port includes a channel defining an opening that is open to the exterior of the body, the channel defining a channel axis positioned at a cross-sectional center thereof and extending along the entire length of the channel, a positive electrode plate at least partially positioned within the channel and pivotably coupled to the body, and a ground electrode plate at least partially positioned within the channel and pivotably coupled to the body.

Alternatively or additionally, in any combination, where the positive electrode plate is pivotable about a first pivot axis, where the ground electrode plate is pivotable about a second pivot axis, and wherein the first pivot axis is parallel to the second pivot axis.

Alternatively or additionally, in any combination, where the positive electrode plate and the ground electrode plate are configured to independently move between a closed position and an open position.

Alternatively or additionally, in any combination, where the ground electrode plate includes one or more biasing members configured to bias the ground electrode plate toward the closed position.

Alternatively or additionally, in any combination, where the opening of the charging port is positioned at a constant vertical charger height along the entire axial length of the channel relative to a support surface.

In still another aspect, a charging station for use with a robotic tool, the charging station including a core having a first end and a second end opposite the first end, the core defining a core axis therethrough, a charging terminal coupled to the core, where the charging terminal includes a positive electrode and a negative electrode, a docking pad coupled to the first end of the core and configured to support the core such that the core axis is substantially normal thereto, where the docking pad includes a top surface and a perimeter, and a stop extending along at least a portion of the perimeter of the docking pad.

Alternatively or additionally, in any combination, where the stop includes a rib extending upwardly from the top surface.

Alternatively or additionally, in any combination, where the stop is a first stop, the charging station further comprising a second stop positioned radially inwardly from the first stop.

Alternatively or additionally, in any combination, where the docking pad defines a terminal height relative to the top surface of the docking pad, and where the terminal height is adjustable.

### BRIEF DESCRIPTION OF THE DRAWINGS

FIG. 1 is a plan view of a robotic tool positioned within a cutting area encompassed by a barrier.
FIG. 2 is a side view of the robotic tool of FIG. 1.
FIG. 3 is a top view of the robotic tool of FIG. 1.
FIG. 3A is a detailed top view of the first end of the garden tool of FIG. 3.
FIG. 4 is a perspective view of the robotic tool of FIG. 1 docked to a charging station.
FIG. 5 is a perspective view of a docking port of the robotic tool.
FIG. 6 is a section view of the docking port of FIG. 5.
FIG. 7 is a section view of a docking terminal of the charging station of FIG. 4.
FIG. 8 is a detailed section view of the docking terminal of FIG. 7 being inserted into a docking port.
FIGS. 9A-9D illustrate various embodiments of a docking terminal.
FIGS. 10-11 illustrate a tool traveling toward a docking station using various approach vectors.
FIG. 12 is a section view of another embodiment of a docking station.
FIG. 13 is a detailed section view of the docking terminal of the docking station of FIG. 12 being inserted into another embodiment of a docking port.
FIG. 14 is a top view of another embodiment of a docking station.
FIG. 15 is a side view of the docking station of FIG. 14.
FIG. 16 is a side view of another embodiment of a docking station and a charging port.
FIG. 17 is a side view of another embodiment of a tool docked to another embodiment of a charging port.
FIG. 18 is a side view of the charging port of FIG. 17.
FIG. 19 is a section view taken along the axis of the charging port of FIG. 18.
FIG. 20 is a detailed side view of a charging port of the tool of FIG. 17.
FIG. 21 is a detailed front view of the charging port of FIG. 20.
FIG. 22 is a detailed side view of the tool and charging port of FIG. 17 docked together.
FIG. 23 is a top view of the tool and charging port of FIG. 22.
FIGS. 24-29 illustrate the tool and charging port of FIG. 22 docked in various relative orientations
FIG. 30 illustrates another embodiment of a docking terminal for use with a docking station.
FIG. 31 is a perspective view of another embodiment of a robotic tool docked to a charging station.
FIG. 32 is a detailed top view of the first end of a garden tool of FIG. 31 with a terminal docked thereto.

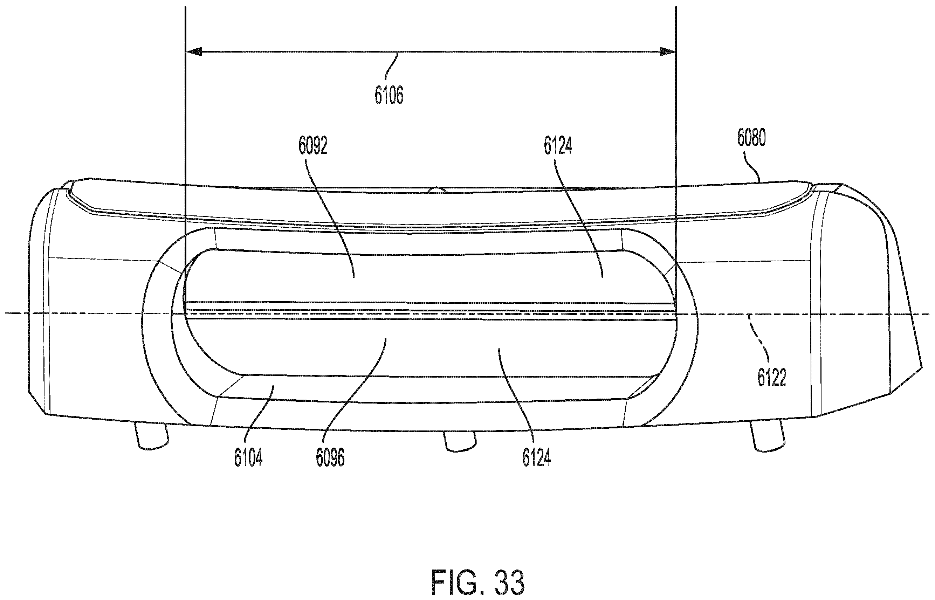

FIG. 33 is a front view of a docking port of the robotic tool.
FIG. 34 is a section view of the docking port of FIG. 33.
FIG. 35A is a perspective view of the electrode plates of FIG. 34 in a closed position.
FIG. 35B is a perspective view of the electrode plates of FIG. 34 in an open position.
FIGS. 36A-36B are section views of a docking terminal of the charging station of FIG. 31.
FIGS. 37A-37B are detailed section views of the docking terminal of FIG. 36A being inserted into a docking port.
FIGS. 38A-38D illustrate various embodiments of the charging station of FIG. 31.
FIGS. 39-40 illustrate a tool traveling toward a docking station using various approach vectors.

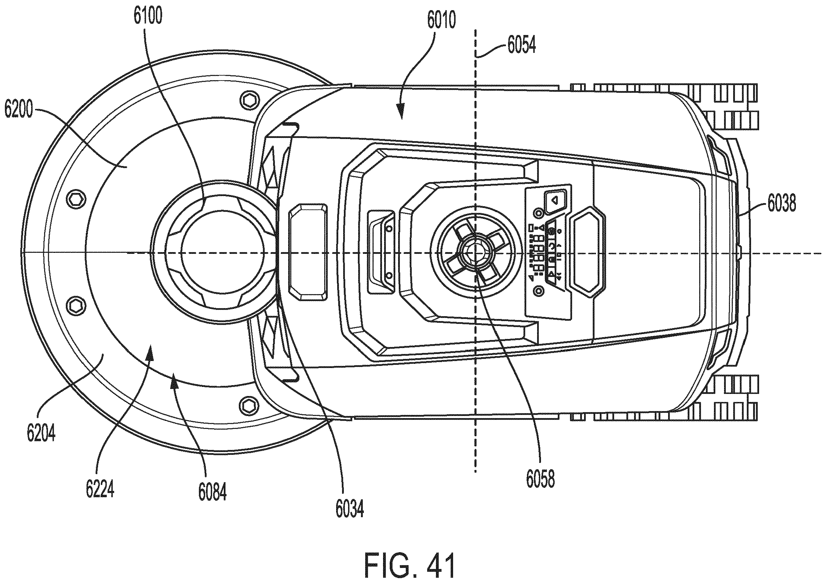

FIG. 41 is a top view of the robotic tool docked to the charging station of FIG. 31.
FIG. 42 is a side view of the robotic tool docked to the charging station of FIG. 31.
FIGS. 43A-43B are front views of another embodiment of a charging station.
FIGS. 44A-44B are front views of another embodiment of a charging station.
FIG. 45 is a front view of another embodiment of a charging station.
FIG. 46 is a front view of another embodiment of a charging station and robotic tool.
FIG. 46A is a detailed front view of the dockings station and robotic tool of FIG. 46.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

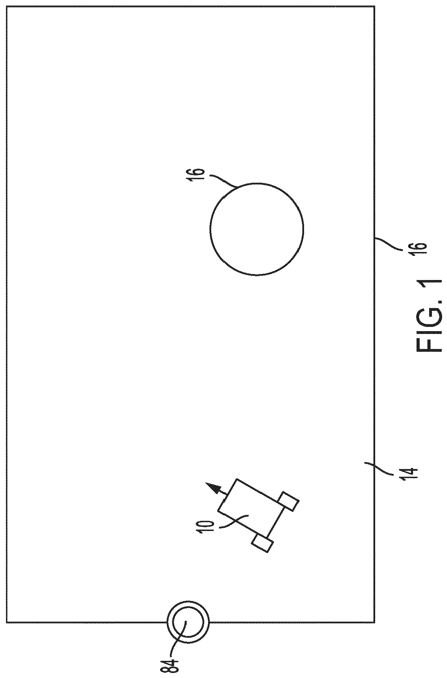

Figures 1-3 illustrate a robotic tool 10. More specifically, the robotic tool 10 includes a robotic lawn mower for use to cut vegetation such as grass in an enclosed cutting area 14. The cutting area 14 generally includes, but is not limited to, a continuous area of grass or other vegetation that is enclosed by one or more barriers 16. In the illustrated embodiment, the barriers 16 include a series of electrified boundary wires enclosing the cutting area 14 while in alternative embodiments different form of barrier may be used such as, but not limited to, walls, pavers, GPS data points, and the like. As shown in FIG. 1, such barriers 16 may be used to enclose the overall cutting area 14 and/or to segregate one or more interior regions from the cutting area 14. While the illustrated tool 10 is a robotic mower, it is understood that in alternative embodiments other forms of robotic tool may be used including, but not limited to, a robotic trimmer, a robotic sprinkler, a robotic fertilizer spreader, a robotic vacuum, and the like.

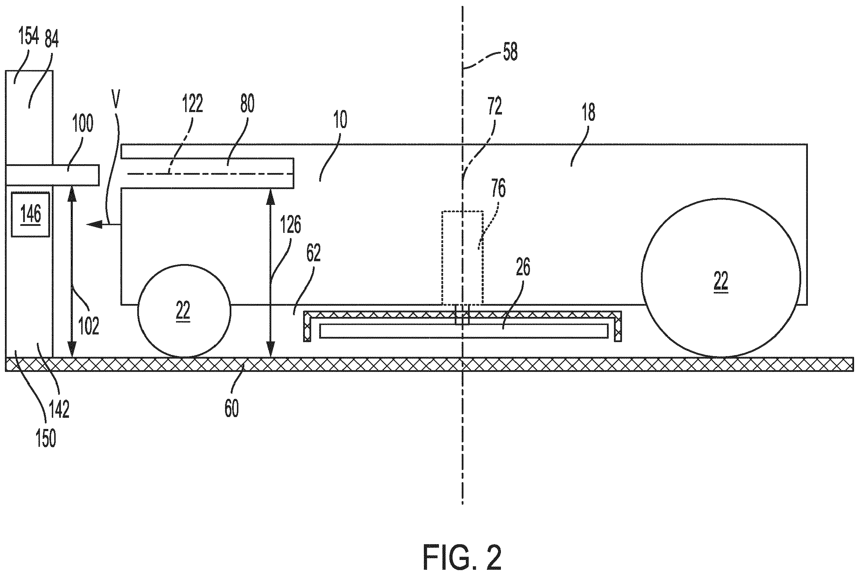

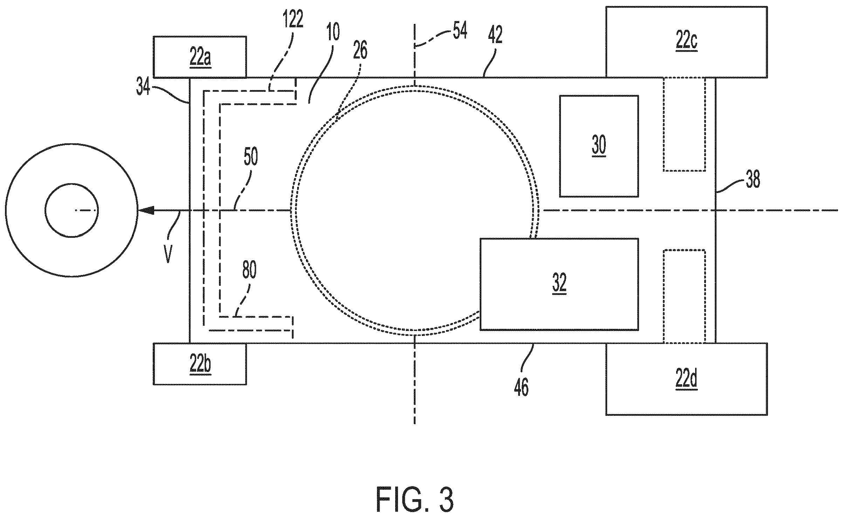

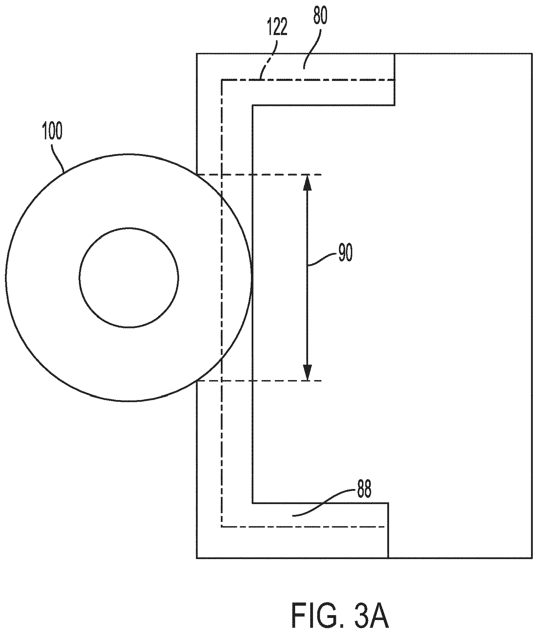

As shown in FIGS. 2 and 3, the tool 10 is an electrically powered, self-propelled device that includes a body 18, a plurality of wheels 22 rotatably mounted to the body 18, a working tool 26 mounted to the body 18, a controller 30, a battery 32, and a charging port 80. The body 18, in turn, includes a front or first end 34, rear or second end 38 opposite the first end 34, a right or first side 42, and a left or second side 46 opposite the first side 42. The body 18 also defines a longitudinal axis 50 extending along the length of the body 18 and centered between the first side 42 and the second side 46 (e.g., passing through both the first and second ends 34, 38). The body 18 also defines a lateral axis 54 extending along the width of the body 18 and centered between the first and second ends 34, 38 (e.g., passing through both the first and second sides 42, 46). The body 18 also defines a central axis 58 generally positioned at the intersection of the longitudinal and lateral axes 50, 54 and oriented perpendicular to both (e.g., in a generally vertical orientation).

As shown in FIG. 3, the tool 10 includes four wheels 22a, 22b, 22c, 22d, each rotatably coupled to the body 18 and configured to support the tool 10 for self-driven movement along a support surface 60 (e.g., the surface of the cutting area 14). In the illustrated embodiment, the wheels 22a, 22b, 22c, 22d include two steerable, undriven wheels 22a, 22b and two non-steerable, driven wheels 22c, 22d. However, in alternative embodiments, all or any sub-set of the wheels 22 may be driven and all or any sub-set of the wheels 22 may be steerable. Furthermore, while the illustrated steerable wheels are passive in nature (e.g., a caster-style wheel), it is understood that in alternative embodiments the steerable wheels 22a, 22b may be actively driven by the controller 30. In still other embodiments, the tool 10 may include more or fewer wheels 22 positioned in different arrangements about the tool 10. In still other embodiments, the wheels 22 may be replaced by other forms of propulsion such as, but not limited to, tracks, omni-wheels, walking legs, and the like.

As shown in FIGS. 2 and 3, the working tool 26 includes a rotating blade mounted for relative rotation about a blade axis 72. More specifically, the blade 26 is mounted to a dedicated blade motor 76 which rotates the blade 26 during use. In the illustrated embodiment, the blade axis 72 is oriented vertically (e.g., parallel to the central axis 58) and positioned proximate the center of the body 18. In some embodiments, the blade axis 72 may be coincident with the central axis 58. While the illustrated working tool 26 is a rotating blade, it is understood that in alternative embodiments the tool 26 may include, but is not limited to, reciprocating blades, a distributor or dispenser of some kind, and the like.

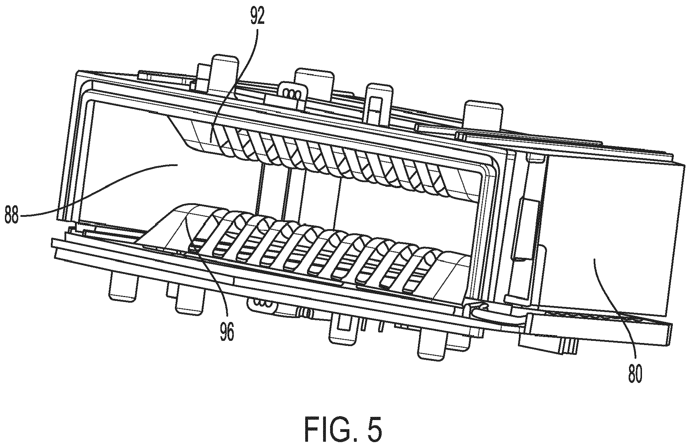

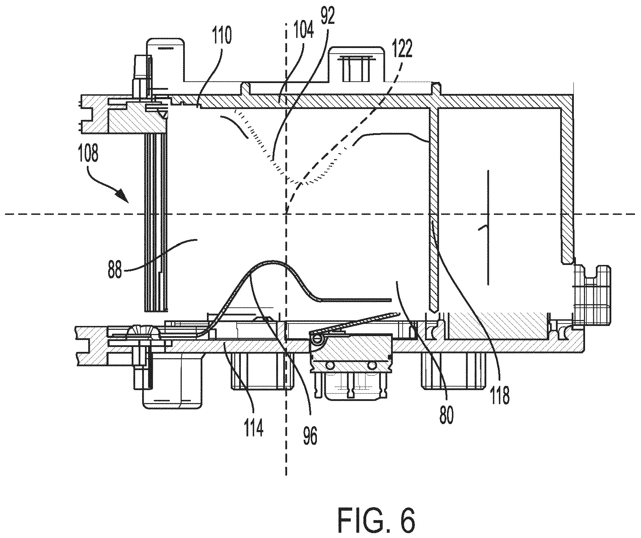

The tool 10 also includes a charging port 80. The charging port 80 is in operable communication with at least the battery 32 of the tool 10 and configured to create a temporary electrical connection with a charging station 84 (described below) to convey the electrical energy output by the charging station 84 to the battery 32 for re-charging operations. More specifically, the charging port 80 includes an elongated channel 88 open to and extending along the exterior of the body 18 with at least a pair of electrodes 92, 96 positioned therein (see FIGS. 5 and 6). During use, the charging port 80 is configured so that a charging terminal 100 of the charging station 84 can be inserted anywhere along the length of the channel 88 and form the desired temporary electrical connection therebetween. As such, less precision is needed when docking the tool 10 with the charging station 84 as an exact lateral alignment is not required.

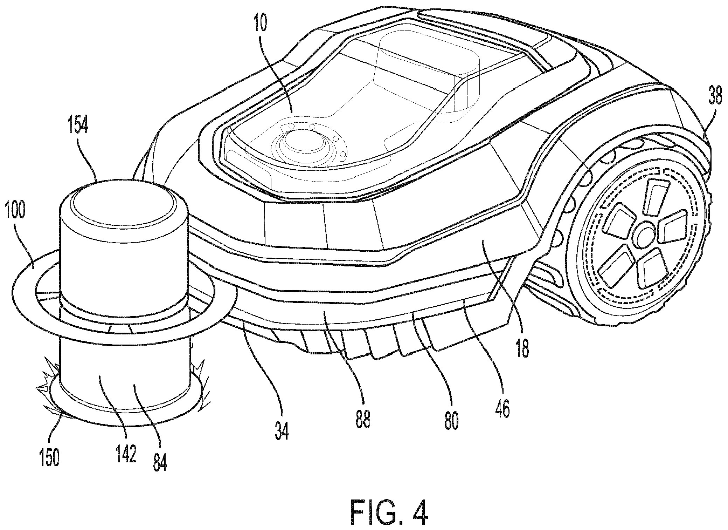

As shown in Fig. 6, the channel 88 of the charging port 80 is at least partially enclosed by a perimeter wall 104 having a cross-sectional shape defining an open end 108 that is open to the exterior of the body 18. More specifically, the perimeter wall 104 includes a first or top portion 110 extending into the body 18 from the open end 108, a second or bottom portion 114 opposite the top portion 110 and extending into the body 18 from the open end 108, and an end portion 118 extending between the top portion 110 and the bottom portion 114 opposite the open end 108. In alternative embodiments different cross-sectional shapes may also be used to accommodate the size and shape of the corresponding charging terminal 100 and/or the size and shape of the electrodes 92, 96 positioned therein. In the illustrated embodiment, the open end 108 of the charging port 80 is positioned at a constant vertical charger height 126 along the entire axial length of the channel 88 (see FIGS. 2 and 4).

The channel 88 of the charging port 80 also defines a channel axis 122 positioned at the cross-sectional center of the channel 88 and extending along the entire length thereof. The channel axis 122 is curvilinear in shape generally corresponding to the shape of the periphery of the body 18 where the channel 88 is open to the exterior thereof. More specifically, the channel axis 122 of the charging port 80 extends continuously along and runs parallel to the first end 34, a forward portion of the first side 42, and a forward portion of the second side 46 of the body 18 such that the open end 108 of the channel 88 is open to the exterior of the body 18 in those areas (see FIGS. 2-4).

In alternative embodiments, the channel 88 and channel axis 122 may continuously extend along and be open to other sides and ends of the body 18. In other embodiments, the channel 88 and channel axis 122 may extend along and be open to the entire periphery of the body 18. In still other embodiments, the channel 88 and channel axis 122 may extend along and be open to the exterior of the body 18 in multiple, non-continuous segments at different locations along the periphery of the body 18. In still other embodiments, the charging port 80 may include a first segment extending along and open to the first end 34 of the body 18 and a second segment extending along and open to the second end 38 of the body 18.

As shown in FIG. 4, the channel 88 has an axial length that is large enough so that the charging terminal 100 may be electrically coupled to the channel 88 in at least two distinct positions. More specifically, the charging station 84 defines an insertion width 90 generally defined as the width of the portion of the charging terminal 100 positioned within the channel 88 when the charging terminal 100 is positioned therein. In the illustrated embodiment, the axial length of the channel 88 is greater than the insertion width 90 (see FIG. 3A). However, in alternative embodiments, the axial width may be equal to the insertion width 90 of the terminal 100. In still other embodiments, the channel 88 has an axial width that is sufficient to allow the terminal 100 to be inserted a sufficient distance therein to form the desired electrical connections.

The charging port 80 also includes a first or positive electrode 92 and a second or ground electrode 96, each positioned within the channel 88 and configured to releasably engage and form an electrical connection with the charging terminal 100 of the charging station 84 (described below). As shown in FIG. 6, the positive electrode 92 is positioned along the top portion 110 of the channel 88 while the ground electrode 96 is positioned along the bottom portion 114 of the channel 88. The resulting orientation positions both electrodes 92, 96 opposite from and facing each other in a clamping configuration.

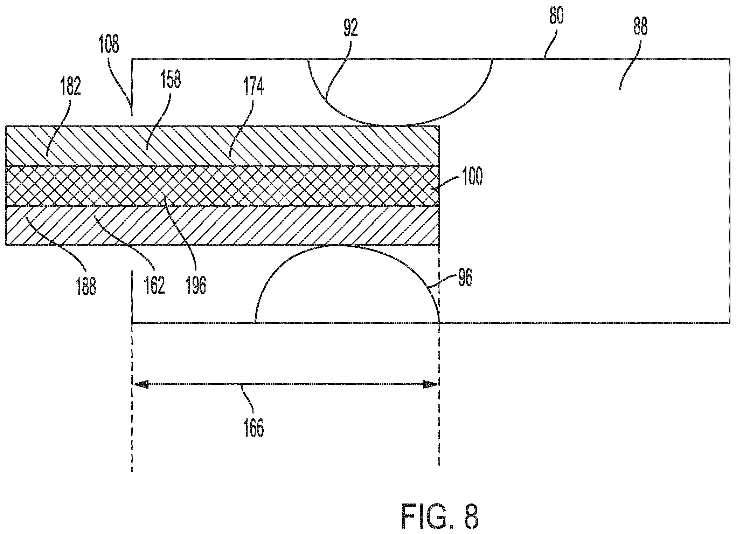

Each electrode 92, 96 of the port 80 is formed from a conductive material, such as metal, and includes a generally arched shape extending away from the perimeter wall 104 and toward the center of the channel 88. The overall arched shape of each electrode 92, 96 causes the electrodes 92, 96 to act as a spring producing a reactionary force toward the center of the channel 88 when the electrode 92, 96 is biased away therefrom. For example, when the charging terminal 100 is introduced into the channel 88 via the open end 108, the charging terminal 100 is sized to bias each electrode 92, 96 outwardly away from the center of the channel 88 and toward the corresponding perimeter wall 104 (see FIG. 8). The resulting displacement causes each electrode 92, 96 to produce a corresponding reactionary force toward the center of the channel 88 and into engagement with the charging terminal 100 itself.

In the illustrated embodiment, the positive electrode 92 is positioned a greater distance from the open end 108 of the channel 88 than the negative electrode 96. By doing so, the ground electrode 96 comes into contact with the charging terminal 100 before the positive electrode 92 when the charging terminal 100 is inserted into the channel 88 via the open end 108. This orientation increases safety as it causes the tool 10 to become grounded (i.e., via the ground electrode 96) before the positive electrode 92 is electrically coupled during the docking process.

In the illustrated embodiment, the charging port 80 has a substantially constant cross-sectional construction along the entire axial length thereof. More specifically, the channel 88 has a substantially constant cross-sectional shape and both electrodes have a constant shape and orientation along the entire axial length of the channel 88.

FIGS. 2 and 4 illustrate a charging station 84 for use with the tool 10. More specifically, the charging station 84 is configured to provide an electrical mounting point to which the charging port 80 of the tool 10 can dock to allow for electrical communication therebetween. The charging station 84 includes a hub or core 142, a station controller 146 mounted within the hub 142, and a charging terminal 100 mounted to the core 142 and in electrical communication with the controller 146. The charging terminal 100, in turn, is mounted to the core 142 at a terminal height 102 from the support surface 60. In the illustrated embodiment, the terminal height 102 is equal to the vertical charger height 126.

The core 142 of the charging station 84 includes an elongated body having a first end 150, and a second end 154 opposite the first end 150. More specifically, the core 142 is oriented so that the first end 150 rests on and is supported by the support surface 60 while the second end 154 is elevated vertically above the support surface 60. While the illustrated core 142 is shown resting directly on the support surface 60, it is understood that in alternative embodiments different forms of support may be used. For example, in some embodiments the core 142 may include one or more stakes extending therefrom (not shown) to allow the core 142 to be secured to a soft support surface such as soil and the like. In other embodiments, the core 142 may be attached to a platform or base (not shown) to provide additional support on hard support surface 60 such a concrete and the like. In still other embodiments, different forms of support may be interchangeable to the core 142 so the user can accommodate the desired installation location.

The charging terminal 100 of the charging station 84 is coupled to the core 142 and configured to form a temporary electrical connection with the charging port 80 of the tool 10. More specifically, the charging terminal 100 includes a first or positive electrode 158 and a second or ground electrode 162 which together are sized and shaped to be positioned within the channel 88 and directly engage the corresponding positive and negative electrodes 92, 96 of the charging port 80 (see FIG. 8). In the illustrated embodiment, the terminal 100 is configured so that as long as the terminal 100 is inserted into the channel 88 a sufficient distance (e.g., the current insertion depth 166 is greater than a pre-determined minimum insertion depth) at any point along the length of the channel 88 the terminal 100 will produce the desired electrical connections (e.g., the positive electrode 92 of the charging port 80 is in direct contact with the positive electrode 158 of the terminal 100 and the ground electrode 96 of the charging port 80 is in direct contact with the ground electrode 162 of the terminal 100). The terminal 100 is also configured so that as long as the terminal 100 is inserted into the channel 88 a sufficient distance (e.g., the current insertion depth 166 is greater than the pre-determined minimum insertion depth) the terminal 100 will produce the desired electrical connections regardless of the relative angular orientations of the charging terminal 100 and the charging port 80.

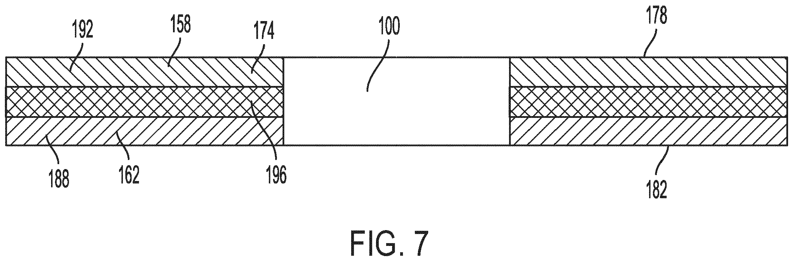

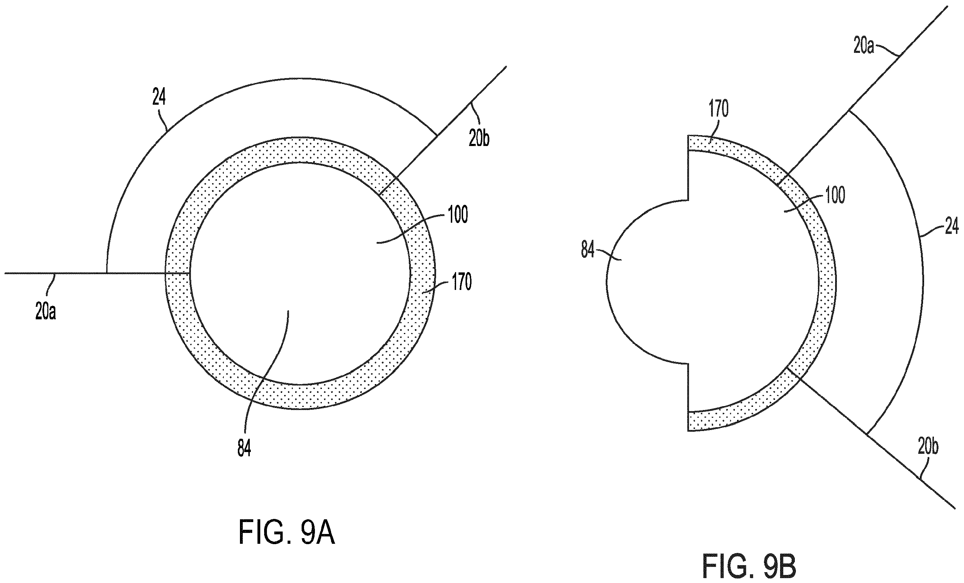

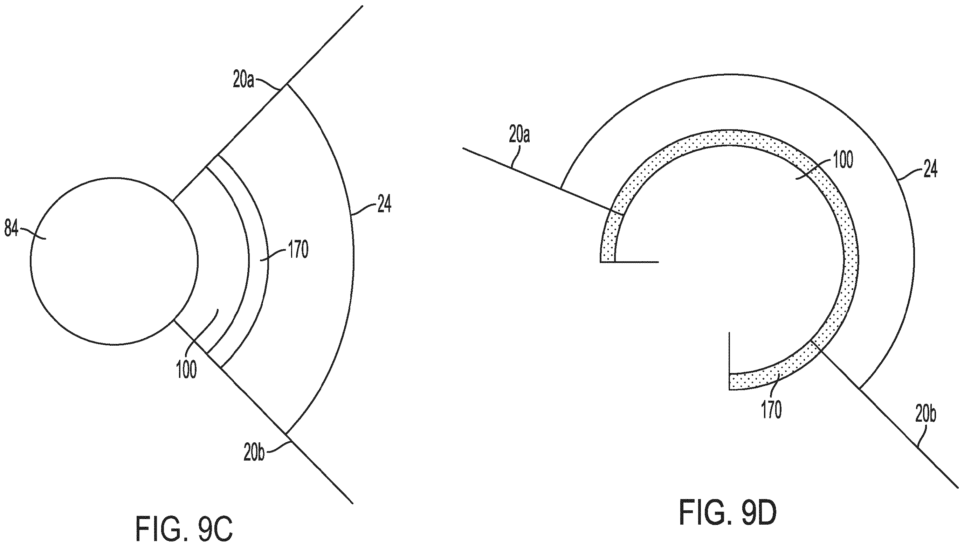

Furthermore, charging terminal 100 is shaped so that the tool 10 may approach the terminal 100 from any direction within a pre-determined approach envelope 170. In the illustrated embodiment, the approach envelope 170 of the illustrated charging terminal 100 is 360 degrees allowing the tool 10 to approach the terminal 100 from all directions (see FIG. 9A). However, in alternative embodiments of the charging terminal 100, the approach envelope 170 may change dependent upon the specific terminal 100 design and/or installation configuration. For example, the approach envelope 170 may include 270 degrees (see FIG. 9D), 180 degrees (see FIG. 9B), 90 degrees (see FIG. 9C), and 45 degrees. In still other embodiments, the charging station 84 may have multiple charge terminals, each being interchangeably installable on the core 142 and having different approach envelope 170. As shown in FIG. 7, the charging terminal 100 has a disk-shaped body 174 which in turn forms a top surface 178, and a bottom surface 182 opposite the top surface 178. In the current construction, the body 174 is formed from three axially stacked layers. A first or bottom layer 188 is formed from electrically conductive material (e.g., metal) and forms the bottom surface 182, the second or top layer 192 is formed from electrically conductive material (e.g., metal) and forms the top surface 178, and the third or insulating later 196 is positioned between the first layer 188 and the second layer 192. As a result, the top layer 192 forms the positive electrode 158 while the bottom layer 192 forms the ground electrode 162.

In some embodiments, the charging terminal 100 defines a terminal axis 176 that defines a lateral plane 180 oriented normal to the terminal axis 176. The lateral plane 180, in turn, subdivides the body 174 into two sub-sections (e.g., a first sub-section and second sub-section). In the illustrated embodiment, one of the positive electrode 258 and the ground electrode 162 is positioned on the exterior surface of the first sub-section while the other of the positive electrode 258 and the ground electrode 162 is positioned on the exterior surface of the second sub-section. In the illustrated embodiment, the terminal axis 176 is coincident with the core axis. Furthermore, in the illustrated embodiment the lateral plane 180 is aligned with the direction of insertion.

The station controller 146 of the charging station 84 is in operable communication with at least the positive electrode 158 and the ground electrode 162 and is configured to control the flow of electrical power thereto. More specifically, the charging station 84 is in electrical communication with a power source (e.g., an internal or external battery, and/or utility power via a plug, and the like) and is configured to convey electrical power to the electrodes 158, 162 during the battery charging operation. While not shown, the charging terminal 100 may include additional electrodes electrically isolated from the positive and ground electrodes 158, 162 and configured to transmit additional electrical power and/or signals between charging station 84 and the tool 10.

In some embodiments, the additional electrical power and/or signal connections may be used as a detector to verify that a satisfactory docking connection has formed between the terminal 100 and the port 80. In such embodiments, the supplemental connection (not shown) may be positioned such that it forms a connection between the terminal 100 and the 80 at a different location than when the positive electrode 158 and/or the ground electrode 162 forms an electrical connection. More specifically, the supplemental connection will only form when the terminal 100 is in a satisfactory docking position relative to the port 80.

As shown in FIGS. 9A-9D, the charging station 84 may also interact with the boundary wire 16 to produce a first boundary end 20a extending outwardly from the charging station 84 and a second boundary end 20b extending outwardly from the charging station 84. Each boundary end 20a, 20b, in turn, extends outwardly from the charging station 84 to define a boundary wire angle 24 therebetween. In the illustrated embodiment, the boundary wire angle 24 is less than or equal to the angle of the approach envelope 170 so that both boundary wire ends 20a, 20b may be positioned within the approach envelope 170 (see FIGS. 9A-9D). By doing so, a tool 10 traveling along the boundary wire 16 from either end 20a, 20b will approach the charging station 84 from within the approach envelope 170. In some embodiments, the ends 20a, 20b include physical ends of the boundary wire 16 that are mounted to the charging station 84. However, in other embodiments, the charging station 84 may be positioned along the length of the wire 16 such that the wire passes therethrough. In such embodiments, the two ends 20a, 20b constitute the length of the wire immediately adjacent the charging station 84.

During use, the tool 10 is configured to travel across the support surface 60 and cut vegetation (e.g., grass). When the cutting operation is complete and/or the battery 32 drops below a pre-determined charge level, the controller 30 of the tool 10 may instruct the tool 10 to return to the charging station 84 to replenish the battery 32. The tool 10 may then maneuver toward the charging station 84 taking any approach vector V that falls within the approach envelope 170. More specifically, the tool 10 may select any approach vector V that brings the charging port 80 into engagement with the charging terminal 100 regardless of where the charging terminal 100 engages the channel 88 along the axial length thereof and regardless of the relative angular orientations of the charging terminal 100 and the charging port 80 so long as the necessary insertion depth 166 is achieved.

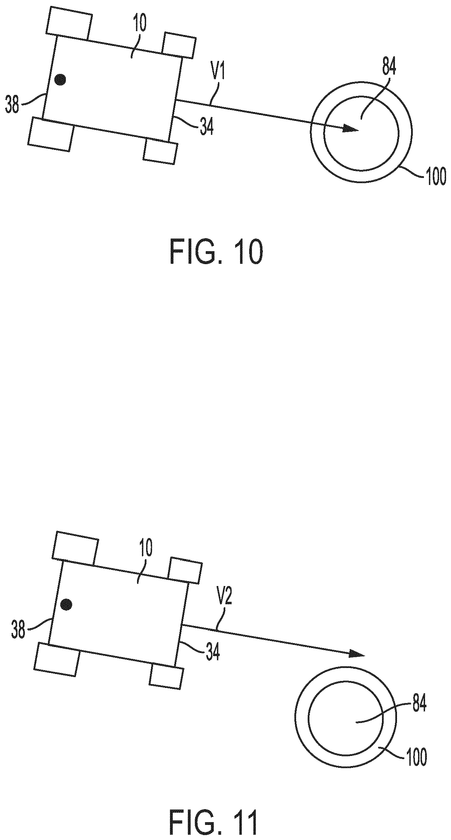

For example, in some embodiments such approach vectors V1 may include vectors traveling radially toward the terminal 100 from any direction within the approach envelope 170 (see FIG. 10). In other embodiments, such approach vectors V2 may include vectors offset from the terminal 100 but falling within the approach envelope 170 (see FIG. 11).

As the tool 10 approaches the station 84 along the approach vector V, the terminal 100 enters into the channel 88 of the charging port 80 via the open end 108. Once in the channel 88, the tool 10 then continues to travel along the approach vector V advancing the terminal 100 deeper into the channel 88 (e.g., increasing the insertion depth 166).

As the insertion depth 166 increases, the ground electrode 162 of the charging terminal 100 engages and makes an electrical connection with the ground electrode 96 of the charging port 80. By doing so, the tool 10 is now safely grounded to the charging station 84.

With the tool 10 grounded, the tool 10 continues to travel along the approach vector V until the positive electrode 158 of the charging terminal 100 engages and makes an electrical connection with the positive electrode 92 of the charging port 80 (see FIG. 8). With this connection, the tool 10 comes to a stop and the station controller 146 can begin the charging process (e.g., conveying electrical power to the battery 32 of the tool 10 via the electrodes 92, 96, 158, 162).

When the charging process is complete, the controller 30 of the tool 10 may instruct the tool 10 to travel away from the charging station 84 so that the terminal 100 is removed from the channel 88 and the electrical connections between the electrodes 92, 96, 158, 162 severed.

In the illustrated embodiment, the controller 30 of the tool 10 may include a program that instructs the tool 10 to approach the charging station 84 from a variety of approach vectors within the approach envelope 170 on subsequent trips to the charging station 84. By doing so, the program allows the tool 10 to minimize the amount of damage done to the turf immediately surrounding the charging station 84 by assuring that no single area of turf is subject to excessive wear. In some embodiments, the approach vectors may be randomly selected from a group of pre-calculated vectors. However, in alternative embodiments, the varied approach vectors may be pre-determined or produce a recurring pattern. For example, if the tool 10 approached the station 84 from the 12 o'clock position for the most recent charging session, the controller 30 may be configured to instruct the tool 10 to approach the station 84 from the 3 o'clock position for the subsequent charging session. Such a program may also then instruct the tool 10 to approach the station 84 from the 6 o'clock position for the next charging session, and so on continuing to adjust the vector by 90 degrees for every charging session.

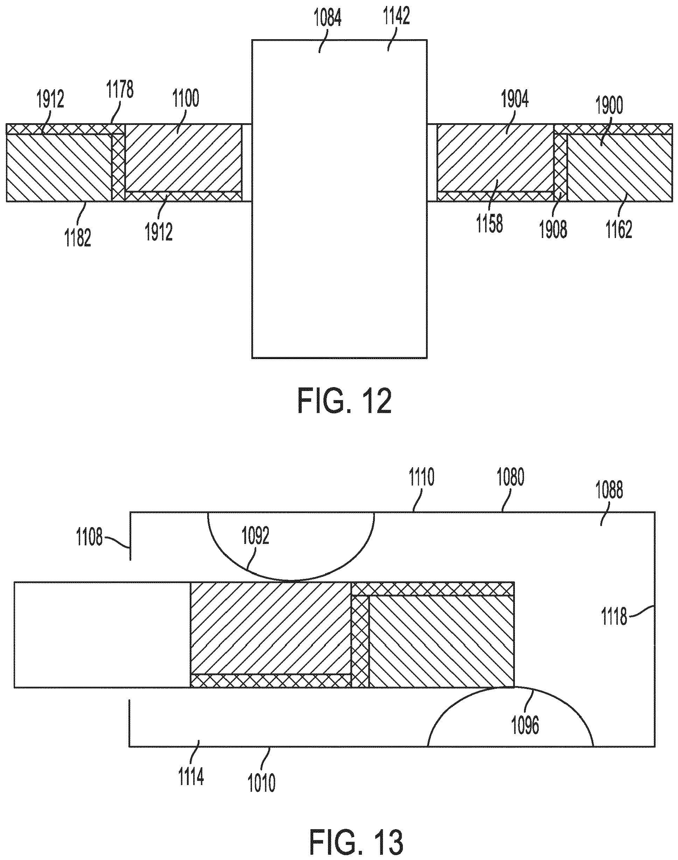

FIGS. 12 and 13 illustrate another embodiment of the tool 1010 and charging station 1084. The charging port 1080 of the tool 1010 and charging station 1084 are substantially similar to the charging port 80 and charging station 84 described above so only the differences will be described in detail herein. The charging terminal 1100 of the charging station 1084 includes a disk-shaped body formed from multiple nested disk-shaped portions. As shown in FIG. 12, the terminal 1100 includes a first portion 1900 formed from conductive material (e.g., metal), a second portion 1904 formed from conductive material (e.g., metal) and positioned radially inwardly from the first portion 1900, and an insulating portion 1908 formed from insulating material and positioned radially between the first portion 1900 and the second portion 1904. In the illustrated embodiment, the first portion 1900 forms the ground electrode 1162 while the second portion 1904 forms the positive electrode 1158.

As shown in FIG. 12, each portion 1900, 1904 of the terminal 1100 may have an insulative coating 1912 applied, alternatingly, to the top surface 1178 and the bottom surface 1182 thereof. By doing so, only one of the two portions 1900, 1904 can be electrically contacted from a given side of the terminal 1100. For example, the positive electrode 1092 of the charging port 1080 can pass over the top surface 1178 of the first portion 1900 without conducting electricity as the terminal 1100 enters the channel 1088 and then subsequently be placed in electrical communication with the top surface 1178 of the second portion 1904 when coming in contact therewith. Stated differently, the coating 1912 eliminates the risk of short circuits as the terminal 1100 is inserted into and removed from the channel 1088.

Furthermore, the core 1142 of the charging station 1084 may be used as a point of reference to allow the tool 1010 to determine how far the terminal 1100 has been inserted into the channel 1088. For example, the core 1142 may include a bumper or have a pre-determined exterior size and contour so that when a corresponding part of the body 18 of the tool 10 is in contact with the core 1142 or at a pre-determined distance from the core 1142, the controller 30 knows that the terminal 1100 has been inserted into the channel 1088 the desired amount to assure the appropriate portions 1900, 1904 are radially aligned and in contact with the corresponding electrodes.

FIG. 13 illustrates another embodiment of the charging port 1080. The charging port 1080 includes an elongated channel 1088 having a top portion 1110, a bottom portion 1114 opposite the top portion 1110, and an end portion 1118 extending between the top portion 1110 and the bottom portion 1114. The charging port 1080 also includes a positive electrode 1092 positioned proximate the open end 1108 of the channel 1088, and a ground electrode 1096 positioned away from the open end 1108 of the channel 1088. More specifically, both electrodes 1092, 1096 are positioned to correspond with the corresponding radial positions of the ground and positive electrodes 1158, 1162 of the charging terminal 1100 so that when the charging terminal 100' is positioned within the slot the correct connections are produced.

While not shown, in still other embodiments, both the positive and negative electrodes 1092, 1096 may be positioned proximate the same portion of the channel 1088 (e.g., both along the top portion 1110 or both along the bottom portion 1114) in instances where no insulative coating 1912 is used. Furthermore, in instances where the terminal 1100 has more than two portions nested radially within each other, more or fewer electrodes may be added to accommodate the additional portions.

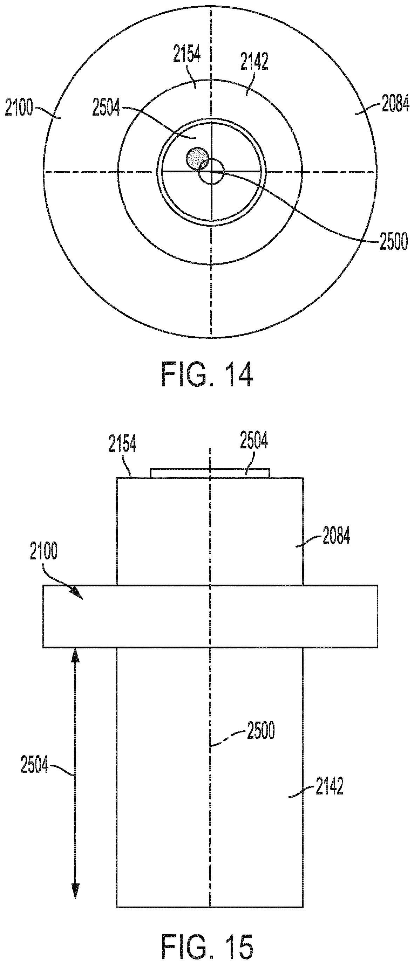

FIGS. 14 and 15 illustrate another embodiment of charging station 2084. The charging station 2084 is substantially similar to the charging station 84, described above, so only the differences will be described in detail herein. The charging station 2084 includes a core 2142 having an elongated cylindrical body defining an axis 2500 extending therethrough. The charging station 2084 also includes a charging terminal 2100 mounted to the core 2142 at a predetermined axial height 2504. In the illustrated embodiment, the charging terminal 2100 is oriented perpendicular to the axis 2500 and fixedly coupled to the core 2142 so the two elements move together as a unit.

The charging station 2084 also includes a level assembly 2504 coupled to the core 2142 and configured to visually represent the orientation of the charging assembly 2084 relative to vertical (e.g., plumb). More specifically, the illustrated level assembly 2504 is coupled to the distal end 2154 of the charging station 2084 and configured to provide a visual representation of the relative orientation of the axis 2500 relative to vertical and, as a result of the relative orientation of the core 2142 and terminal 2100, the relative orientation of the terminal 2100 to horizontal. In the illustrated embodiment, the level assembly 2504 includes a bubble level mounted on the top of the core 2142, however in alternative embodiments different forms of level assembly 2504 may be used such as but not limited to an electronic leveling device, a weighted pendulum, other forms of mechanical and/or electrical plumbness indicators, and the like. In still other embodiments, the level assembly 2504 may include a mounting location for an external leveling device. For example, the level assembly 2504 may include a mounting location sized to have a cell phone running a leveling app placed thereon.

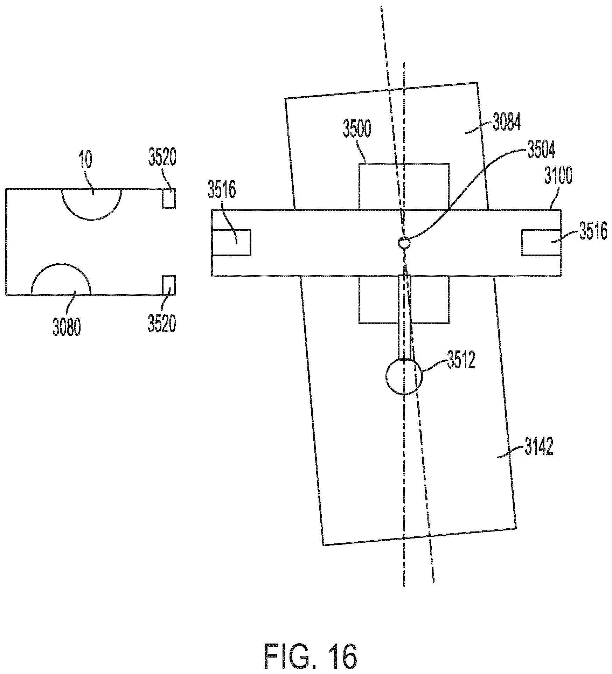

FIG. 16 illustrates another embodiment of the charging station 3084. The charging station 3084 is substantially similar to the charging station 84 so only the differences will be described in detail herein. The charging station 3084 includes a core 3142, and a charging terminal 3100 movably mounted to the core 3142. More specifically, the charging terminal 3100 is movably mounted to the core 3142 via a mounting assembly 3500 so that the charging terminal 3100 can pivot with respect to the core 3142 about a pivot point 3504. In the illustrated embodiment, the mounting assembly 3500 includes a double-gimbal mount extending between and coupled to both the charging terminal 3100 and the core 3142. The double-gimbal mount, in turn, allows the charging terminal 3100 to rotate with respect to the core 3142 about two degrees of freedom.

The charging terminal 3100 also includes a counterweight 3512 mounted thereto and positioned directly vertically below the pivot point 3504 (e.g., directly vertically below the intersection of the two axes of the double-gimbal mount 3500). By doing so, the counterweight 3520 applies a downward force to the charging terminal 3100, through the pivot point 3500, thereby maintaining the charging terminal 3100 in a horizontal orientation with respect to the force of gravity. Together with the mounting assembly 3500, the counterweight 3512 automatically maintains the charging terminal 3100 in a horizontal orientation even when the core 3142 is not in a vertical orientation, allowing for some variation when installing the charging station 3084 itself.

The charging station 3084 may also include one or more magnets 3516 mounted to the charging terminal 3100 and configured to interact with corresponding magnets 3520 mounted to the charging port 3080 of the tool 10. More specifically, the magnets 3516, 3520 are configured to interact with one another as the tool 10 approaches the charging terminal 3100 to align the terminal 3100 with the charging port 3080. In the illustrated embodiment, the magnets 3516, 3520 are positioned so that the magnetic forces interact to pivot the charging terminal 3100 about the pivot point so that it is aligned for insertion into the charging port 3080.

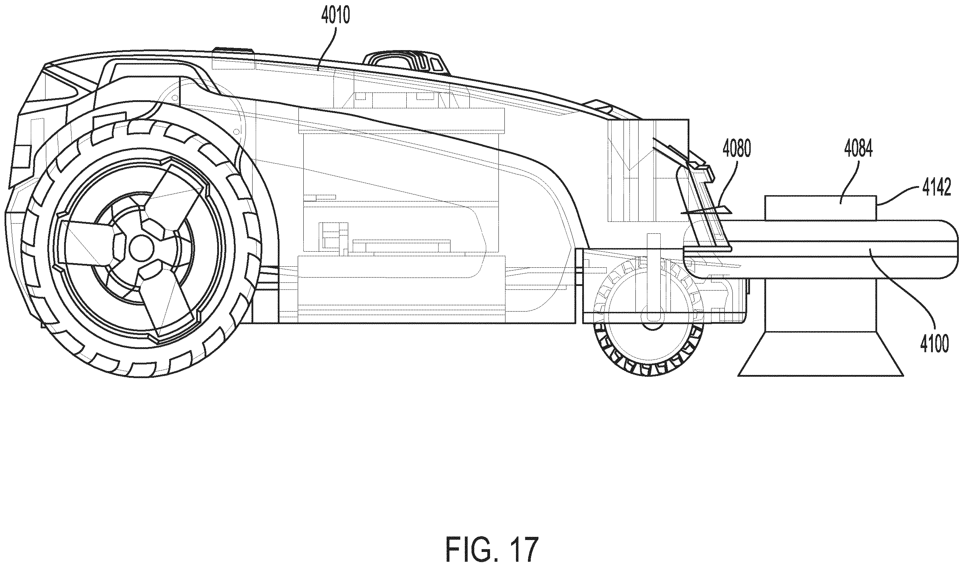

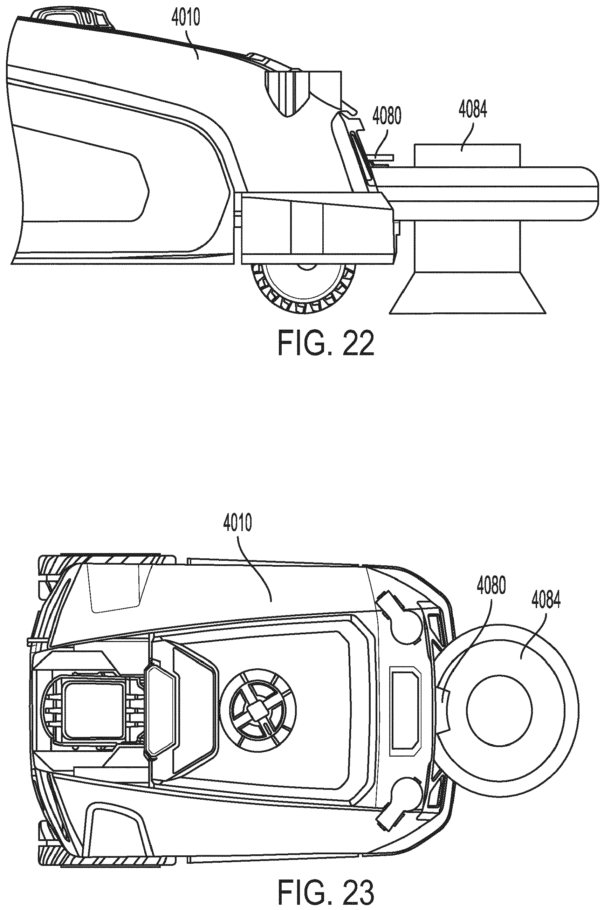

FIGS. 17-29 illustrate another embodiment of the tool 4010 and charging station 4084. The charging port 4080 of the tool 4010 and charging station 4084 are substantially similar to the charging port 80 and charging station 84 described above so only the differences will be described in detail herein. The charging terminal 4100 includes a core 4142 defining a core axis 4500, and a charging terminal 4100 mounted to the core 4142.

The core 4142 of the charging station 4084 includes a body having a first portion 4504 proximate a base 4508 and a second portion 4512 extending upwardly from the first portion 4504 to define the distal or top end 4516. In the illustrated embodiment, the first portion 4504 is frusto-conical in shape reducing in diameter as it extends axially upwardly to match the outer diameter of the second portion 4512. The resulting core shape produces a body where the diameter at the base 4508 is greater than the diameter of the body at the axial height corresponding with the charging terminal 4100. By doing so, the core 4142 is able to have increased stability without the need of a separate pad and while still allowing for sufficient clearance around the terminal 4100 for the docking process.

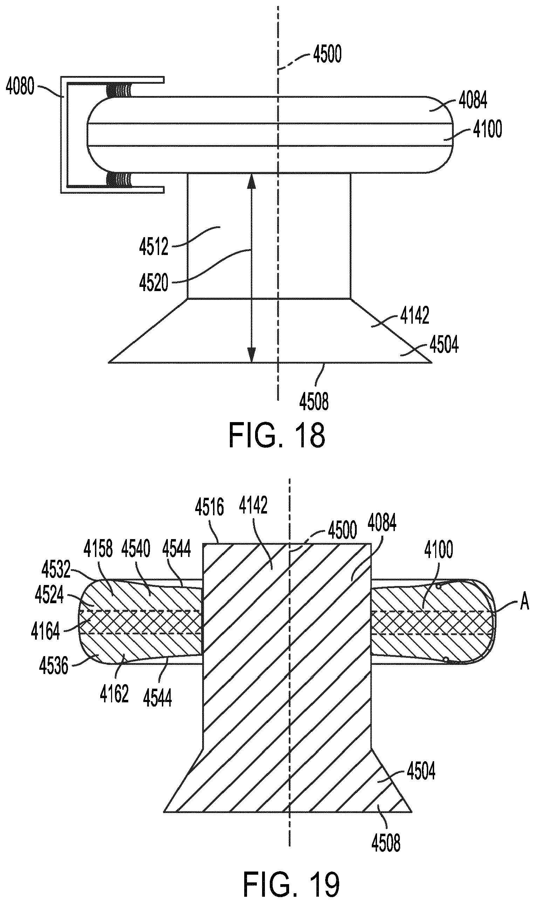

The charging terminal 4100 of the charging station 4084 forms a disk-like shape extending radially outwardly from the core 4142 at a predetermined height 4520 from the base 4508. More specifically, the terminal 4100 includes a pre-determined cross-sectional shape that is extruded about the core axis 4500 to form the finished shape. As shown in FIG. 19, the cross-sectional shape of the terminal 4100 includes a bulbous outer portion 4524 having a large radius of curvature at both the top and bottom edges 4532, 4536 thereof. The cross-sectional shape also includes an inner portion 4540 extending radially inwardly from the outer portion 4524 that narrows in axial height as it extends radially inwardly toward the core 4142. Stated differently, the cross-sectional shape of the charging terminal 4100 includes a maximum axial height at a first radial distance from axis 4500 and smoothly and continuously decreases in axial height as it extends radially inwardly therefrom. In some embodiments, the terminal 4100 includes a concave surface 4544 formed into both the top and bottom surfaces thereof, and wherein the concave surfaces 4544 are interconnected along the perimeter by a convex surface 4548. Still further, the terminal 4100 is shaped so that the outer surface extends over an arc A greater than 180 degrees (see FIG. 19).

The charging terminal 4100 also includes a first or positive electrode 4158 and a second or ground electrode 4162. More specifically, one electrode forms the axial top half of the terminal 4100 while the other electrode forms the axial bottom half (see FIG. 19). The charging terminal 4100 may also include an insulating layer 4164 positioned axially between and electrically isolating the two electrodes 4158, 4162 from each other.

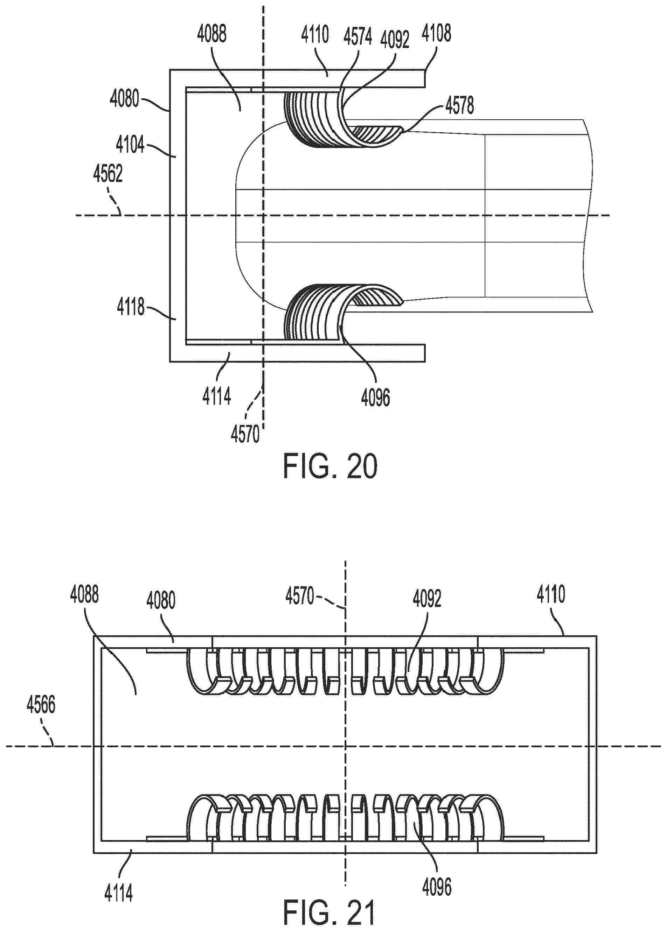

The tool 10 also includes a charging port 4080. The charging port 4080 is in operable communication with at least the battery 32 of the tool 4010 and configured to create a temporary electrical connection with the charging station 4084. More specifically, the charging port 4080 includes a channel 4088 open to the exterior of the body 18 with at least a pair of electrodes 4092, 4096 positioned therein (see FIGS. 20 and 21). During use, the charging port 4080 is configured so that the charging terminal 4100 of the charging station 4084 can be inserted into the channel 4088 under a wide range of relative orientations and still produce the desired electrical connections therebetween.

As shown in FIG. 20, the channel 4088 of the charging port 80 is at least partially enclosed by a perimeter wall 4104 having a cross-sectional shape defining an open end 4108 that is open to the exterior of the body 18. More specifically, the perimeter wall 4104 includes a first or top portion 4110 extending into the body 18 from the open end 4108, a second or bottom portion 4114 opposite the top portion 4110 and extending into the body 18 from the open end 4108, and an end portion 4118 extending between the top portion 4110 and the bottom portion 4114 opposite the open end 4108. In alternative embodiments different cross-sectional shapes may also be used to accommodate the size and shape of the corresponding charging terminal 4100 and/or the size and shape of the electrodes 4092, 4096 positioned therein.

The channel 4088 of the charging port 4080 also defines an insertion axis 4562 extending out of the open end 4108 of the channel 4088, a lateral axis 4566 positioned perpendicular to the insertion axis 4562 and generally extending along the width of the channel 4088, and a height axis 4570 oriented perpendicular to both the insertion axis 4562 and the lateral axis 4566.

The charging port 80 also includes a first or positive electrode 4092 and a second or ground electrode 4096, each positioned within the channel 4088 and configured to releasably engage and form an electrical connection with the corresponding electrodes 4158, 4162 of the charging terminal 4100. As shown in FIG. 20, the positive electrode 4092 is positioned along the top portion 4110 of the channel 4088 while the ground electrode 4096 is positioned along the bottom portion 4114 of the channel 4088. The resulting orientation positions both electrodes 4092, 4096 opposite from and facing each other in a clamping configuration.

Each electrode 4092, 4096 of the port 4080 is formed from a conductive material, such as metal, and includes a generally hooked shape whereby the trailing edge 4574 is connected to the channel 4088 and the leading edge 4578 is freely movable relative thereto. The overall hooked shape of each electrode 4092, 4096 allows for maximum displacement of the electrode 4092, 4096 relative to the channel 4088 whereby the electrodes 4092, 4096 act as a spring producing a reactionary force toward the center of the channel 4088 when the electrodes 4092, 4096 are biased away therefrom. The resulting displacement causes each electrode 4092, 4096 to produce a corresponding reactionary force toward the center of the channel 4088 and into engagement with the charging terminal 100 itself.

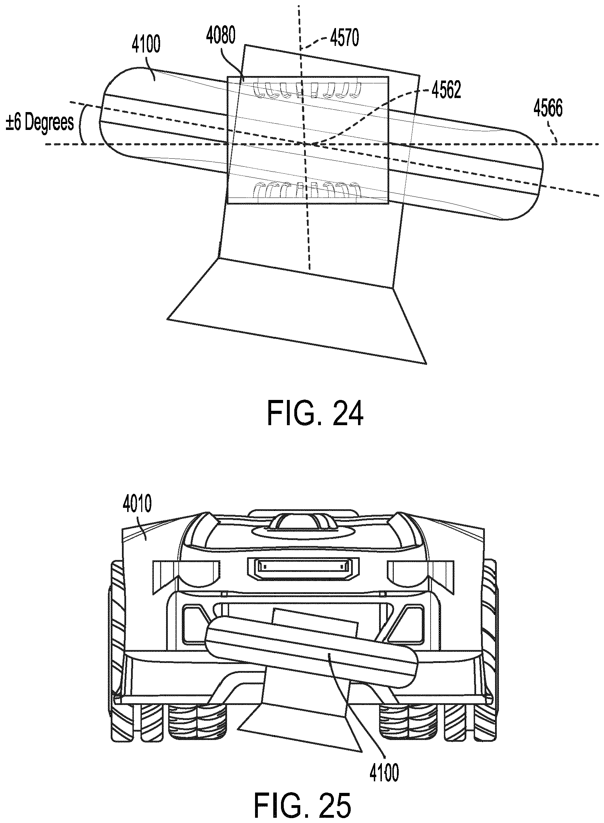

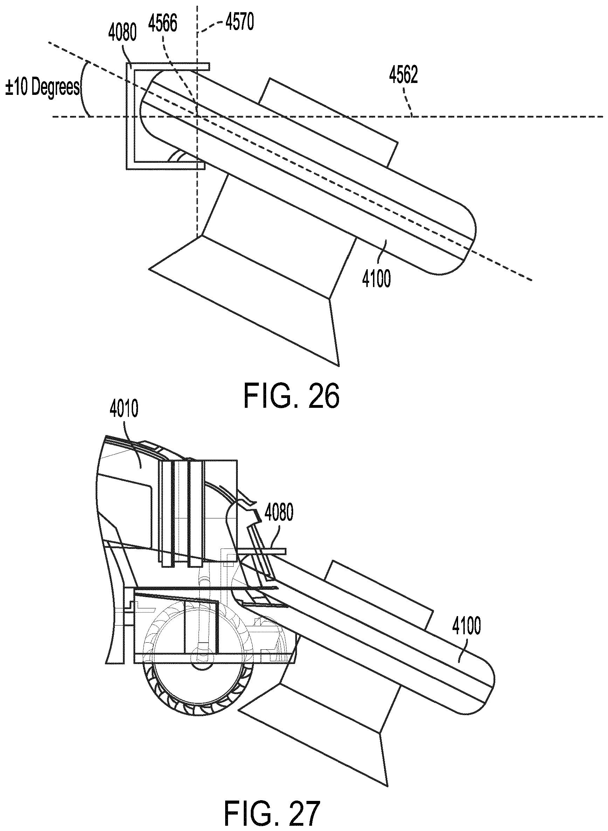

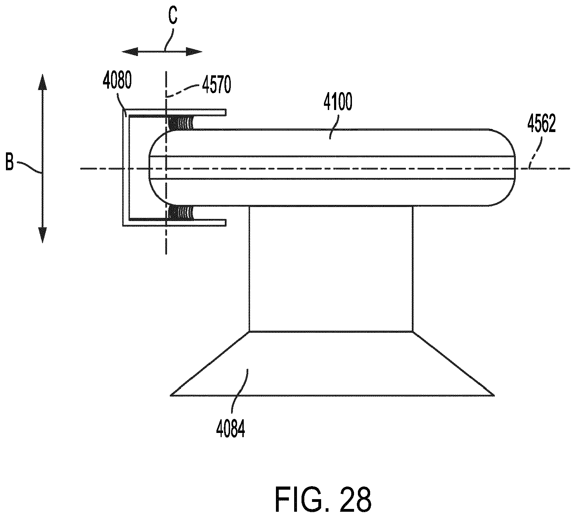

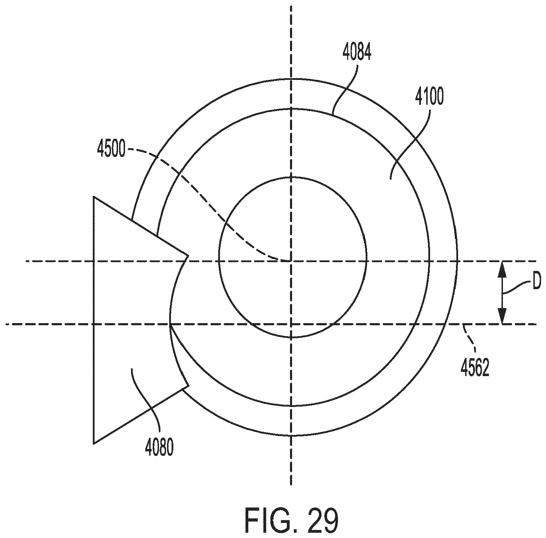

During use, the size and shape of the charging terminal 4100 and the charging port 4080 permit the two elements utilize a greater envelope of relative orientations and still produce the desired electrical connection. For example, in some embodiments, the terminal 4100 and charging port 4080 are configured so that the orientation of the charging port 4080 may vary rotationally relative to the orientation of the terminal 4100 about the insertion axis 4562 up to 6 degrees (see FIGS. 24 and 25). Furthermore, the terminal 4100 and charging port 4080 are configured so that the charging port 4080 may vary relative to the terminal 4100 about the lateral axis 4566 up to 10 degrees (see FIGS. 26 and 27). Still further, the terminal 4100 and charging port 4080 may be configured so that the charging port 4080 may vary translationally in vertical height (See Direction B of FIG. 28; e.g., along the height axis 4570) relative to the terminal 4100 up to 5 mm. Still further, the terminal 4100 and the charging port 4080 may be configured so that the charging port 4080 may vary translationally along the insertion axis 4562 up to 10 mm (see Direction C of FIG. 28). Finally, the terminal 4100 and the charging port 4080 may be configured so that the charging port 4080 may translationally be offset laterally along the lateral axis 4566 up to 10 mm (see Direction D, FIG. 29). The terminal 4100 is also configured so that the charging port 4080 may be attached thereto anywhere along all 360 degrees of the terminal 4100.

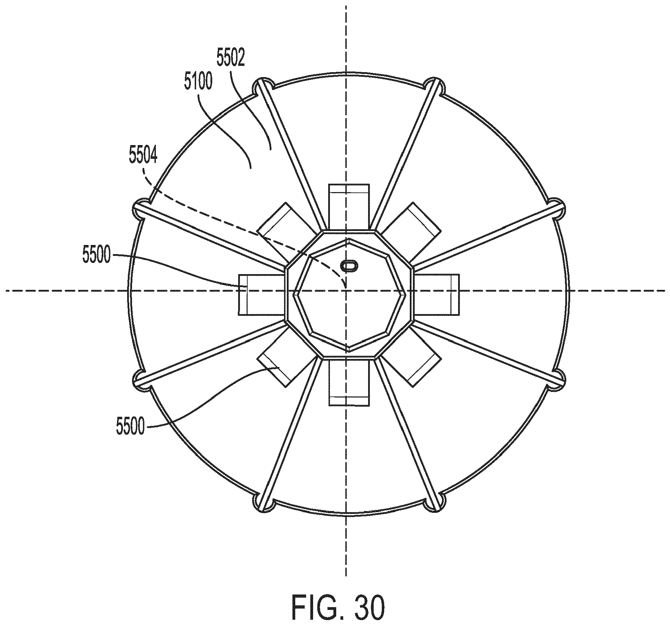

FIG. 30 illustrates another embodiment of the terminal 5100. The terminal 5100 is substantially similar to the terminal 100 described above so only the differences will be discussed in detail herein. The terminal 5100 includes a disk-shaped body 5502 defining a terminal axis 5504, and a plurality of discrete electrodes 5500 coupled to the body 5502 and positioned circumferentially about the terminal axis 5504. More specifically, the electrodes 5500 are positioned at equal angular positions about the entire 360 degrees of the terminal 5100. In the illustrated embodiment, the electrodes 5500 are positioned every 45 degrees.

In some embodiments, the electrodes 5500 may be modular relative to the terminal 5100 so that individual electrodes 5500 may be attached to or removed from the terminal 5100 by the user to adjust the relative angular locations on the terminal 5100 where an electrical connection may be made. Stated differently, the user can position electrodes 5500 to correspond with the desired approach envelope 5170. For example, in instances where the user requires a 180-degree approach envelope 5170, the user may only position terminals 5100 in four adjacent positions. In other examples where the user desires a 90-degree approach envelope 5170, the user may only include two electrodes 5500. In still other embodiments, the user may position the electrodes 5500 to produce multiple non-continuous approach envelopes 5170. Generally speaking, the user may position the electrodes 5500 to correspond with the locations of the boundary wires (e.g., the first and second boundary ends, not shown).

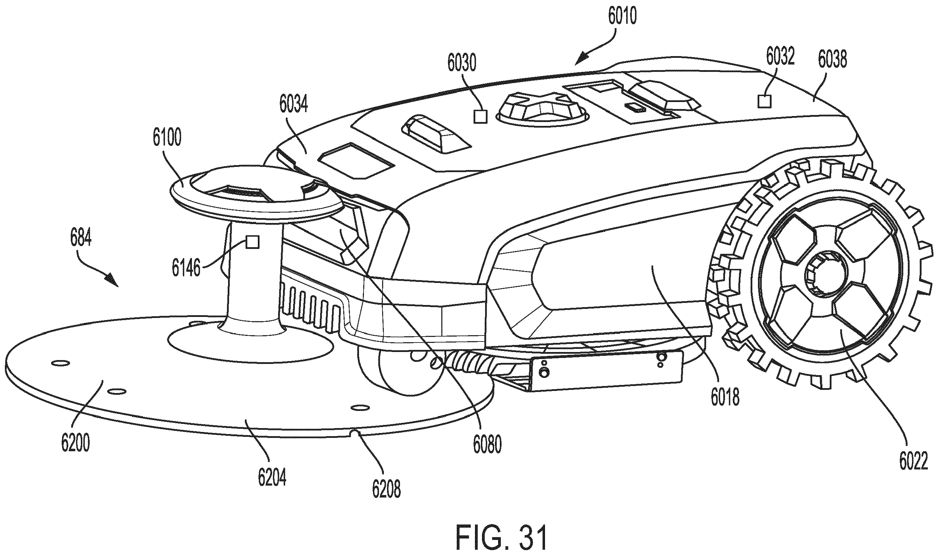

FIG. 31 illustrates another embodiment of the tool 6010. The tool 6010 is substantially similar to the tool 10 so only the difference will be discussed in detail herein.

The tool 6010 also includes a charging port 6080. The charging port 6080 is in operable communication with at least the battery 6032 of the tool 6010 and configured to create a temporary electrical connection with a charging station 6084 (described below) to convey the electrical energy output by the charging station 6084 to the battery 6032 for re-charging operations. More specifically, the charging port 6080 includes an elongated channel 6088 extending along at least a portion of the exterior of the body 6018, and a pair of charging plates 6092, 6096. During use, the charging port 6080 is configured such that a charging terminal 6100 of the charging station 6084 can be inserted anywhere along the length of the channel 6088 and form the desired temporary electrical connection therebetween. The charging port 6080 is also configured such that the charging terminal 6100 of the charging station 6084 can be inserted into the charging port 6080 when the charging terminal 6100 is offset vertically or offset angularly therefrom. As such, less precision is needed when docking the tool 6010 with the charging station 6084 as an exact lateral alignment, vertical alignment, and/or angular alignment is not required.

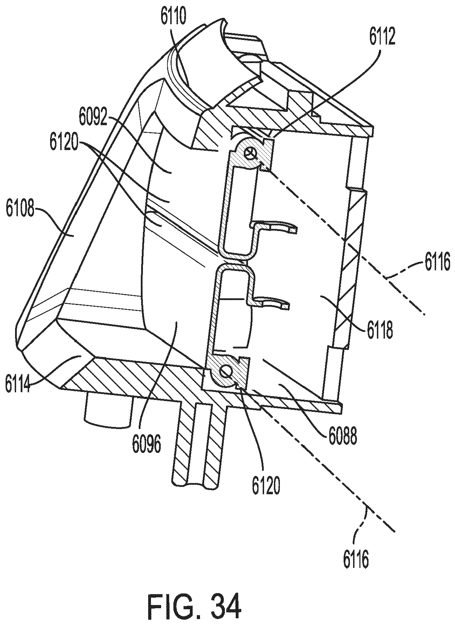

As shown in FIG. 34, the channel 6088 of the charging port 6080 is at least partially enclosed by a series of walls defining an opening 6104 through which the charging terminal 6100 may pass to gain access to the charging plates 6092, 6096. More specifically, the channel 6088 is at least partially enclosed by a faceplate 6108 defining the opening 6104, a first or top wall 6110 extending into the body 6018 from the faceplate 6108, a second or bottom wall 6114 opposite the top wall 6110 and extending into the body 6018 from the faceplate 6108, and an end wall 6118 extending between the top wall 6110 and the bottom wall 6114 opposite the faceplate 6108. In alternative embodiments, different sizes and shapes of openings 6104 may also be used to accommodate the size and shape of the corresponding charging terminal 6100. In the illustrated embodiment, the opening 6104 of the faceplate 6108 of the charging port 6080 is positioned at a constant charger height 6126 along the entire axial length thereof (see FIG. 31). The charger height 6126 is measured between the support surface 6060 and the centerline 6216 of the channel 6088.

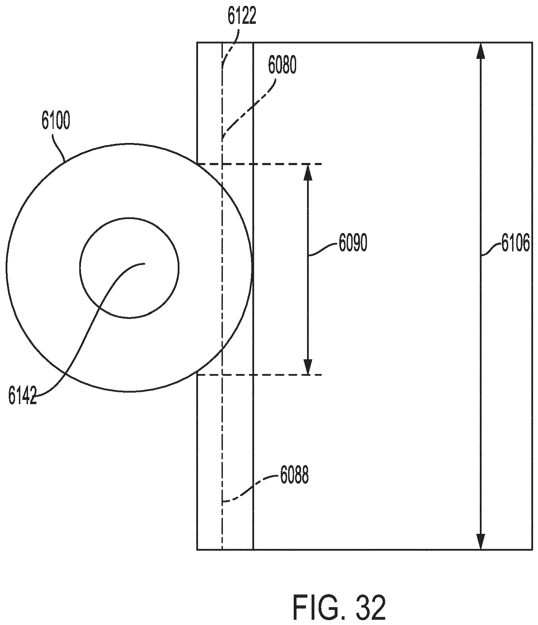

As shown in FIG. 31, the opening 6104 of the channel 6088 has an axial width 6106 that is large enough such that the charging terminal 6100 may be electrically coupled to the channel 6088 in at least two distinct positions. The ratio between the axial width 6106 and the mower width may be between 0.4 and 1.0. In other embodiments, the ratio may be between 0.5 and 1.0, 0.6 and 1.0, 0.7 and 1.0, 0.8 and 1.0, 0.6 and 0.8, or between 0.65 and 0.7. Further, the charging station 6084 defines an insertion width 6090 generally defined as the width of the portion of the charging terminal 6100 positioned within the channel 6088 when the charging terminal 6100 is positioned therein. In the illustrated embodiment, the axial width 6106 of the channel 6088 is greater than the insertion width 6090 (see FIG. 32). More specifically, the ratio between the axial width 6106 and the insertion width 6090 may be between 1.12 and 3.0. In other embodiments, the ratio may be between 1.12 and 3.5, 1.12 and 2.5, 1.12 and 2.0, 1.5 and 3.5, 1.5 and 3.0, 1.5 and 2.5, or between 1.5 and 1.75. However, in alternative embodiments, the axial width 6106 may be equal to the insertion width 6090 of the terminal 6100. In still other embodiments, the channel 6088 has an axial width 6106 that is sufficient to allow the terminal 6100 to be inserted a sufficient distance therein to form the desired electrical connections.

The charging port 6080 includes a pair of charging plates 6092, 6096 each of which are made out of a conductive material and configured to form a temporary electrical connection with a corresponding electrode 6158, 6162 of the charging terminal 6100. More specifically, each charging plate 6092, 6096 includes an elongated metallic body having a first or hinged end 6112 defining a hinge axis 6116 (e.g., a pivot axis), and a distal end 6120 opposite the hinged end 6112. The charging plates 6092, 6096 also both define a contact surface 6124 extending between the hinged end 6112 and the distal end 6120. In the illustrated embodiment, the contact surface 6124 is substantially planar extending a lateral width that is equal to or greater than the axial width 6106 of the opening 6104 of the channel 6088. The first charging plate is a first or a positive electrode plate 6092 while the second charging plate is a second or ground electrode plate 6096. In the illustrated embodiment, the charging plates 6092, 6096 are made of continuous metallic bodies. In other embodiments, the charging plates 6092, 6096 may be made of a plurality of smaller metallic bodies that form the elongated charging plates. In still other embodiments, the charging plates 6092, 6096 may be formed from a non-conductive or poorly conductive material (e.g., plastic, and the like) and coated in a metallic material.

The positive electrode plate 6092 and the ground electrode plate 6096 are both movably mounted to the body 6018 within the channel 6088. More specifically, both charging plates 6092, 6096 are coupled to the body 6018 proximate the opening 6104 of the faceplate 6108 allowing the charging plates 6092, 6096 to move with respect to the body 6018 to accommodate the insertion of the terminal 6100 into the channel 6088. In the illustrated embodiment, the positive electrode plate 6092 is pivotably coupled to and extends from the top wall 6110 of the charging port 6080 while the second charging plate 6096 is pivotably coupled to and extends from the bottom wall 6114. Both plates 6092, 6096 are also mounted such that both hinge axes 6116 are parallel to each other and in a generally horizontal orientation (e.g., parallel to the lateral axis 6054). In other embodiments, the opposite orientation (e.g., positive electrode 6092 on the bottom with ground electrode 6096 on top) may also be present. In still other embodiments, the electrode plate 6092, 6096 may be mounted such that they pivot about a substantially vertical axis (e.g., parallel with axis 6058). In still other embodiments, one of the plates 6092, 6096 may be spaced rearward from the opening 6104 so that the other plate 6092, 6096 may make contact with the terminal 6100 first before the second. In such embodiments, the ground electrode 6096 is generally placed in the forward position (e.g., closer to the opening 6104) so that it contacts the terminal 6100 and grounds the system before the positive electrode 6092 forms a connection. In other embodiments, the positive electrode plate 6092 may be fixed to the top wall 6110 and bend rather than pivot, and the negative electrode plate 6096 may be fixed to the bottom wall 6114 and bend rather than pivot. In such embodiments, the electrode plates 6092, 6096 may be formed from a resiliently deflectable material - such as spring steel and the like - to allow the plates 6092, 6096 to deflect and elastically return to a rest position.

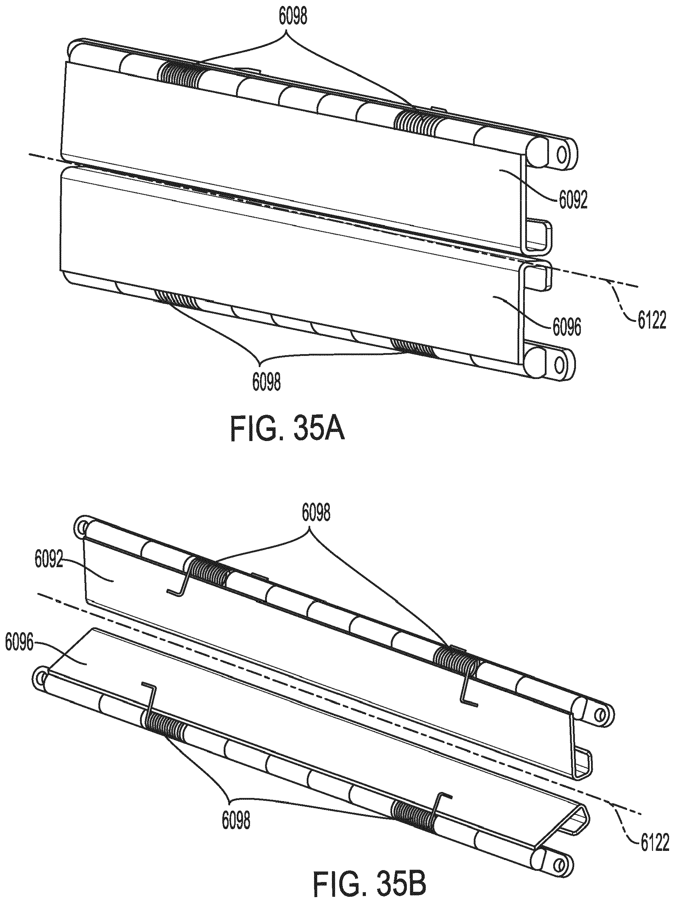

During operation, the electrode plates 6092, 6096 are independently pivotable with respect to the body 6018 between a closed or rest position (FIG. 35A) and one or more open or actuated positions (FIG. 35B). More specifically, when the plates 6092, 6096 are in the rest position, both contact surfaces 6124 are oriented generally perpendicular to the opening 6104 whereby the two plates 6092, 6096 generally cover the opening 6104.

In the one or more open positions, the electrode plates 6092, 6096 pivot inwards into the channel 6088 and toward the end wall 6118 such that the opening 6104 of the channel 6088 is open. More specifically, the plates 6092, 6096 are configured so that the process of inserting the terminal 6100 through the slot and into the channel 6088 causes the electrode plates 6092, 6096 to pivot into the channel 6088 while remaining in contact therewith. In the illustrated embodiment, the electrode plates 6092, 6096 also include one or more biasing members 6098 (e.g., springs) configured to bias the electrode plates 6092, 6096 toward the closed position and into engagement of the terminal 6100 when present.

The electrode plates 6092, 6096 of the charging port 6080 are configured to releasably engage and form an electrical connection with the charging terminal 6100 of the charging station 6084 (described below). For example, the physical presence of the charging terminal 6100 serves to press against and bias the electrode plates 6092, 6096 out of the closed position and toward the open position. When the electrode plates 6092, 6096 are in the open position by the charging terminal 6100, the force applied by the biasing members 6098 keeps the plates 6092, 6096 in physical contact with the charging terminal 6100.

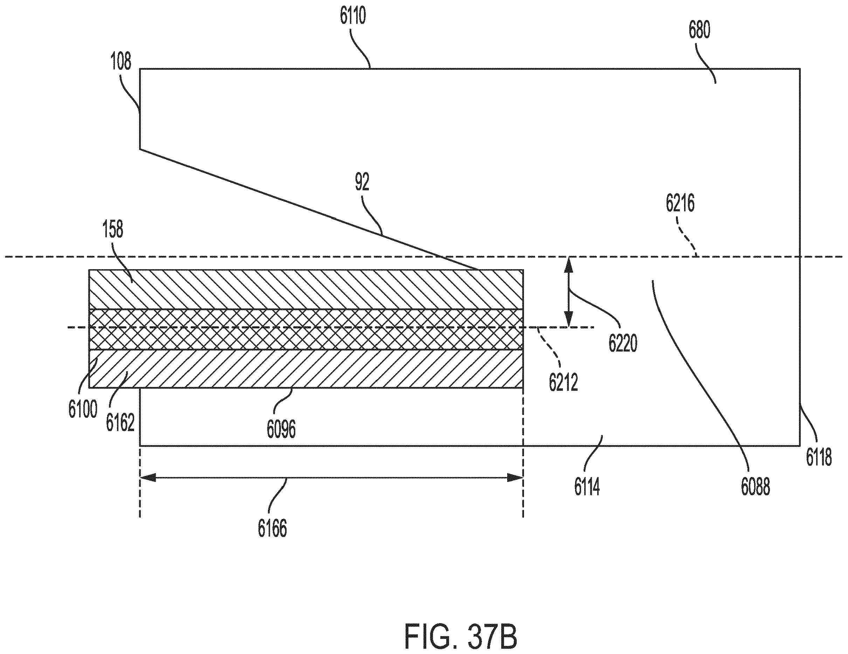

The pivoting feature of the electrode plates 6092, 6096 allows the charging port 6080 to engage with the charging terminal 6100 even when the centerline 6212 of the charging terminal 6100 is offset vertically from the centerline 6216 of the charging port 6080 (see FIG. 37B) to define an offset distance 6220 therebetween. More specifically, the charging port 6080 can accommodate the terminal 6100 when the centerlines 6212, 6216 are offset vertically by having one of the two electrode plates 6092, 6096 pivot a greater degree than the other. For example, in instances where the centerline 6212 of the terminal 6100 is positioned below the centerline 6216 of the charging port 6080 (e.g., closer to the bottom wall 6114), the second electrode plate 6096 will pivot a greater amount than the first electrode plate 6092 such that both plates 6096, 6092 remain in physical contact with the terminal 6100. In the illustrated embodiment, the charging port 6080 is configured to accommodate docking situations where the offset distance 6220 is up to two inches (e.g., the alignment window). In other embodiments, the offset distance 6220 may no greater than 1 inch, no greater than 1.5 inches, no greater than 2.5 inches, and no greater than 3 inches.

In the illustrated embodiment, the charging port 6080 has a substantially constant cross-sectional construction along the entire axial length thereof. More specifically, the channel 6088 has a substantially constant cross-sectional shape and both electrodes have a constant shape and orientation along the entire axial length of the channel 6088.

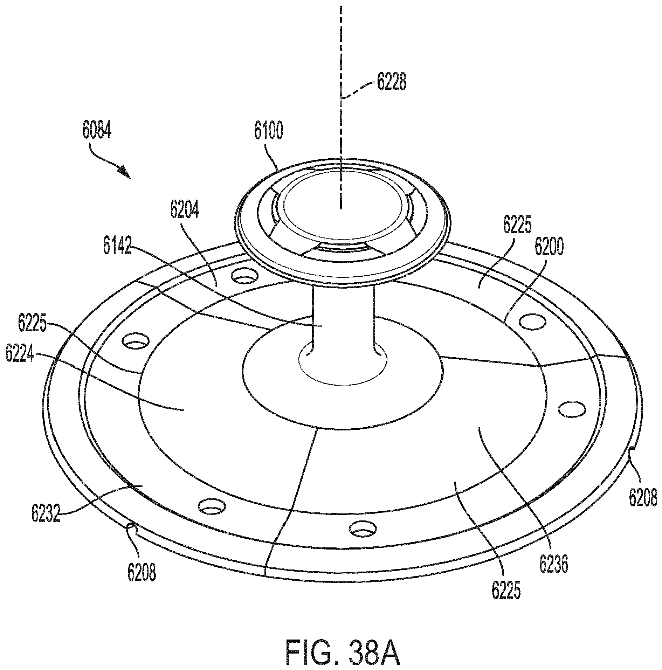

FIGS. 31, 38A-38D illustrate a charging station 6084 for use with the tool 6010. More specifically, the charging station 6084 is configured to provide an electrical mounting point or terminal 6100 to which the charging port 6080 of the tool 6010 can dock to allow for electrical communication therebetween. The charging station 6084 may include a hub or core 6142, a docking pad 6200, a charging terminal 6100 mounted to the core 6142, and a station controller 6146 disposed in the charging terminal 6100. In some embodiments, the charging terminal 6100 is moveably mounted to the core 6142. More specifically, the terminal 6100 may be vertically adjustable along the length the core 6142, explained in detail below. The charging terminal 6100 may also pivot with respect to the core 6142. In such embodiments, the charging terminal 6100 may pivot about one or more axes to provide one or more degrees of freedom with respect to the core 6142. Such axes may be oriented vertically, horizontally, and the like.

The docking pad 6200 of the charging station 6084 is configured to be positioned on the support surface 6060 and forms a top surface 6224 that is configured to allow the tool 6010 to travel thereon. In the illustrated embodiment, the docking pad 6200 has generally circular shape and defines a docking axis 6228 positioned normal to the top surface 6224 and positioned at the geometric center thereof. In other embodiments, different sizes and shapes of docking pads 6200 may be used. The docking pad 6200 may be made out of a variety of materials (e.g., rubber, hard plastic, metal, and the like).

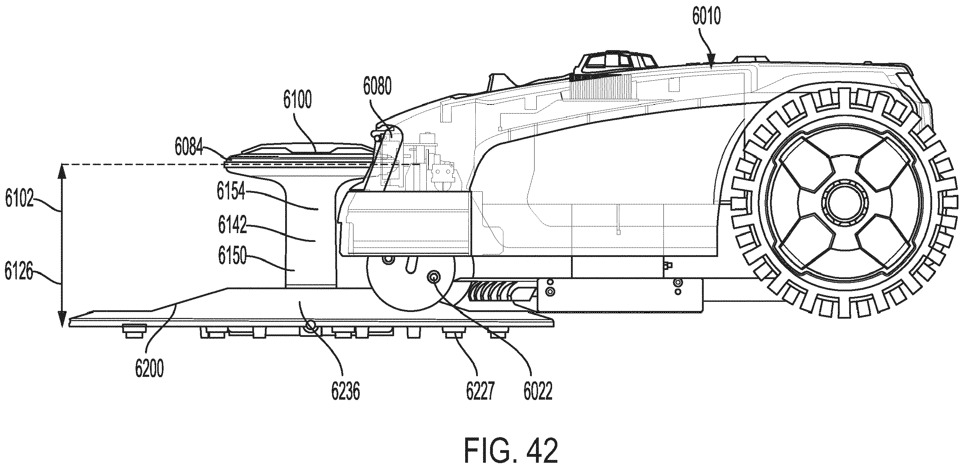

As shown in Fig. 42, the docking pad 6200 may also include a series of feet or protrusions 6227 extending from the underside thereof to elevate the docking pad 6200 from the support surface 6060 to form a gap therebetween. In some embodiments, the gap between the docking pad 6200 and the support surface 6060 allows the boundary wire 6016 and a power supply cable 6017 to run underneath the docking pad where they are ultimately connected to the core 6142. The docking pad 6200, in turn, protects the boundary wire 6016 and the power supply cable 6017 from the tool 6010 during operation. In still other embodiments, the docking pad 6200 may include one or more channels and/or grooves formed therein (e.g., into the top or bottom surface) to accommodate the boundary wire 6016 and/or power supply cable 6017.

The docking pad 6200 also includes a docking recess 6204 formed into the top surface 6224 thereof and configured to at least partially receive and retain one or more the wheels 6022 of the tool 6010 therein (see Fig. 42). More specifically, the docking recess 6204 is configured to retain the front wheels 6022a, 6022b of the tool 6010 within a predetermined zone so that the tool 6010 remains generally stationary relative to the docking pad 6200 during the docking process without the use of active stabilization methods (e.g., the use of the driven wheels 6022c, 6022d, and the like) even when the docking pad 6200 is positioned on an inclined support surface 6060.

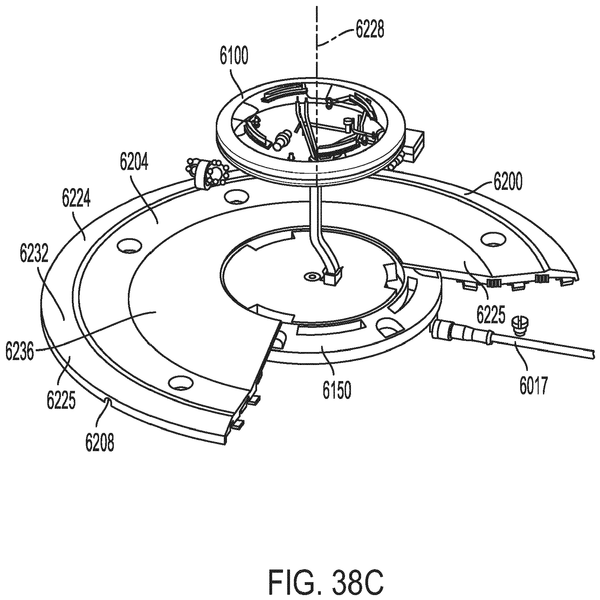

In the illustrated embodiment, the docking recess 6204 includes an annular region formed between an exterior stop 6232 (e.g., a first stop), generally extending along the perimeter of the docking pad 6200, and an interior stop 6236 (e.g., a second stop), generally positioned proximate the docking axis 6228. More specifically, the exterior stop 6232 of the illustrated docking pad 6200 is an annular ridge extending upwardly from the top surface 6224 having tapered sides. As such, the stop 6232 is shaped such that the wheels 6022 of the tool 6010 may roll up and over the stop 6232 but only with the application of sufficient force to overcome the height of the stop 6232 itself. Therefore, the stop 6232 is able to be traversed when the tool 6010 is actively being driven but is not able to be traversed purely under the force of gravity present due to the magnitude of the inline upon which the docking pad 6200 is placed. While the illustrated exterior stop 6232 includes a continuous ridge along the entire periphery of the docking pad 6200, it is understood that in other embodiments different forms of retention may be used such as, but not limited to, spring loaded bumpers, a plurality of rib segments, and the like. In some embodiments, the recess 6204 may include a depression formed into the top surface 6224 such that the edges of the recess 6204 produce the first and second stops 6232, 6236 (see FIG. 38C). In still other embodiments the bottom of the recess may be "V-shaped" to help funnel and maintain the wheels 6022 of the tool 6010 at the apex thereof.

The interior stop 6236 may be similar to the exterior stop 6232 and extend upwardly from the top surface 6178 and have tapered sides. The interior stop 6236 is generally frusto-conical in shape and sized such that it will not be traversed by the wheels 6022 of the tool 6010 under the force of gravity alone. In other embodiments, different forms of interior stops 6236 may be used such as, but not limited to, spring loaded bumpers, a plurality of rib segments, and the like. In still other embodiments, the interior stop 6236 may not be present or may be incorporated into the core 6142.

In some embodiments, the docking recess 6204 may also include a plurality of radial stops extending between the interior stop 6236 and the exterior stop 6232. In such embodiments, the radial stops may be used to sub-divide the annular region of the docking recess 6204 into two or more sub-regions to further restrain the possible movement of the wheels 6022 of the tool 6010 with respect to the docking pad 6200.

In still other embodiments, the interior and exterior stops 6236, 6232 may be replaced and/or supplemented by a matrix of bumps, recesses, and/or other contours formed into the top surface 6224 of the docking pad 6200. For example, the top surface 6224 may include a series of rounded bumps formed over at least a portion of the top surface 6224 and oriented in an array such that the wheels 6022 of the tool 6010 can be nested and retained between adjacent bumps. By doing so, the wheels 6022 can be maintained in a plurality of different locations on the top surface 6224 of the docking pad 6200. In other embodiments, the docking recess 6204 may further include a rectangular matrix of intersecting ribs to restrict the movement of the wheels 6022 on the top surface 6224. In still other embodiments, the docking recess 6204 may include a magnet to retain magnetized and/or metallic wheels in a given location using magnetic fields.

In some embodiments, the docking pad 6200 may be formed from a plurality of sections or wedges 6225 that extend radially outwardly from the core 6142 over a pre-determined angular width relative to the docking axis 6228. Together, the wedges 6225 may be combined in various combinations to allow different sizes and shapes of docking pad 6200 to be produced. As shown in FIG. 38C, each wedge 6225 may extend over 6120 degrees such that three wedges 6225 produce a circular shape. However, in other embodiments different combinations and sizes may be used to produce alternative shapes.

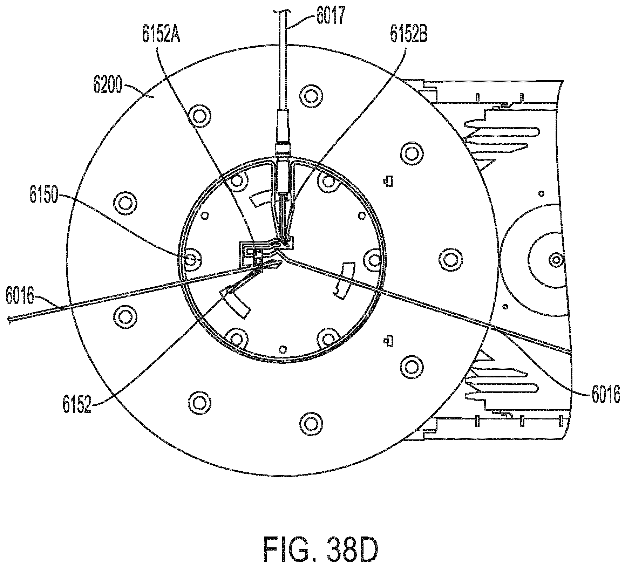

Each wedge 6225 may also include a corresponding docking recess 6204, an interior step 6236, and an exterior stop 6232. Each wedge 6225 may also include a corresponding channel 6208 formed into the bottom surface thereof and configured to retain a corresponding boundary wire 6016 therein. In the illustrated embodiment, the channel 6208 is oriented radially with respect to the docking axis 6228 such that the boundary wire can extend from the core 6142 to the exterior of the docking pad 6200. However, in other embodiments different shapes and contours may be present. When assembled, the user may position each wedge 6225 so that it may correspond to where the boundary wire 6016 extends from the charging station 6084 (e.g., so that the channel 6208 defined by the wedge 6225 aligns with the orientation of the boundary wire 6016 in that particular location). The wedges 6225 may be rotatably coupled to core 6142 such that the wedges 6225 can be moved if the boundary wire 6016 is moved to ensure the boundary wire 6016 runs through one of the channels 6208. In the illustrated embodiment, each wedge 6225 is independently adjustable with respect to the core 6142 to allow each wedge 6225 to correspond with a particular boundary wire 6016 (see FIG. 38D).

The core 6142 of the charging station 6084 includes an elongated body having a first end 6150, a second end 6154 opposite the first end 6150, and a base 6151. The core 6142 also defines a longitudinal axis 6244 (e.g., a core axis) passing through both the first end 6150 and the second end 6154. When assembled, the core 6142 is oriented so that the first end 6150 rests on and is supported by the base 6151 while the second end 6154 is elevated vertically above the docking pad 6200. More specifically, the core 6142 is positioned such that the longitudinal axis 6244 is coincident with docking axis 6228. The base 6151 of the core 6142 may be integrated into or form a portion of the interior stop 6236.

With reference to FIG. 38D, the base 6151 of the core 6142 may further include a cable management system 6152. The cable management system 6152 organizes the boundary wire 6016 and the power supply cable 6017. A first section 6152A of the cable management system 6152 secures the boundary wire 6016 to the core 6142 so that any external forces applied to the boundary wire 6016 (e.g., a person stepping on the wire, a person tripping on the wire, and the like) will not be directly transmitted to the core 6142. Rather, the first section 6152A will absorb those forces and isolate the more delicate electronics contained in the core 6142. The first section 6152A also allows the boundary wire 6016 to enter the docking pad 6200 on one side, loop inside the core 6142, and leave the docking pad 6200 on another side.

A second section 6152B of the cable management system 6152 secures the power supply cable 6017 to the core 6142 such that the power supply cable 6017 can provide power to the charging terminal 6100. Similar to the first section 6152A, the second section 6152B also isolates any external forces from reaching the core 6142. The base 6151 may include a plurality of snaps that are configured to engage with the docking pad 6200 such that the docking pad can be snapped to the base 6151 and the docking pad 6200 is secured to the core 6142. In other embodiments, fasteners or an adjustable form of connection may be used to allow the wedges 6225 to be continuously adjustable with respect to the core 6142.

While the illustrated core 6142 is used together with the docking pad 6200, it is understood that in other embodiments, the base 6151 of the core 6142 can be directly placed on and supported by the support surface 6060 without the use of the docking pad 6200. In such embodiments, the core 6142 may be secured directly to support surface 6060 using fasteners, stakes, guy wires, and the like.

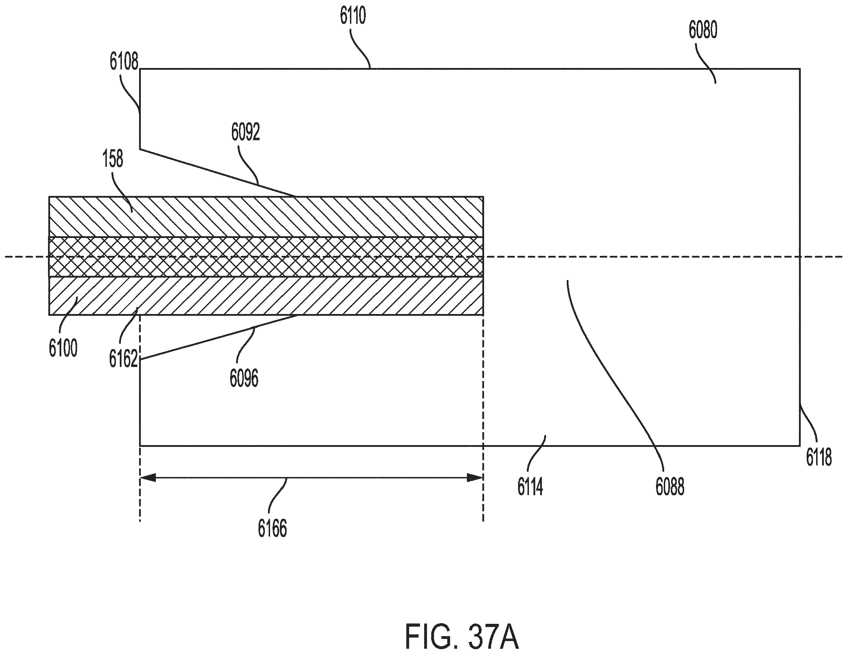

The charging terminal 6100 of the charging station 6084 may be movably coupled to the core 6142 and be configured to form a temporary electrical connection with the charging port 6080 of the tool 6010 to allow the transfer of electrical energy therebetween. More specifically, the charging terminal 6100 includes a first or positive electrode 6158 and a second or ground electrode 6162 which together are sized and shaped to be positioned within the channel 6088 and directly engage the corresponding positive and negative electrode plates 6092, 6096 of the charging port 6080 (see FIG. 37A). In the illustrated embodiment, the terminal 6100 is configured so that as long as the terminal 6100 is inserted into the channel 6088 a sufficient distance (e.g., the current insertion depth 6166 is greater than a pre-determined minimum insertion depth) at any point along the axial length of the channel 6088 the terminal 6100 will produce the desired electrical connections (e.g., the positive electrode plate 6092 of the charging port 6080 is in direct contact with the positive electrode 6158 of the terminal 6100 and the ground electrode plate 6096 of the charging port 6080 is in direct contact with the ground electrode 6162 of the terminal 6100). The terminal 6100 is also configured so that as long as the terminal 6100 is inserted into the channel 6088 a sufficient distance (e.g., the current insertion depth 6166 is greater than the pre-determined minimum insertion depth) the terminal 6100 will produce the desired electrical connections regardless of the relative angular orientations of the charging terminal 6100 and the charging port 6080 taken relative to the docking axis 6228.

In some embodiments, additional electrical power and/or signal connections may be used as a detector to verify that a satisfactory docking connection has formed between the terminal 6100 and the charging port 6080. In such embodiments, the supplemental connection (not shown) may be positioned such that it forms a connection between the terminal 6100 and the charging port 6080 at a different location than when the positive electrode 6158 and/or the ground electrode 6162 forms an electrical connection. More specifically, the supplemental connection will only form when the terminal 6100 is in a satisfactory docking position relative to the charging port 6080.

Furthermore, charging terminal 6100 is disk-shaped so that the tool 6010 may approach the terminal 6100 from any direction over a 360 degree arc. However, in alternative embodiments, the charging terminal 6100 may be shaped differently to limit the approach angles possible dependent upon the specific terminal 6100 design and/or installation configuration. For example, the terminal 6100 may be shaped so that the tool can approach the terminal 6100 from any direction over a 270 degree arc, a 180 degree arc, a 120 degree arc, a 90 degree arc, and a 60 degree arc. Alternatively, the charging station 6084 may include multiple terminals 6100 that are shaped such that the tool 6010 can approach the terminal 6100 from any direction over a plurality of arcs. For example, the arcs may be two 90 degrees arcs that are opposing or are spaced apart from each other.

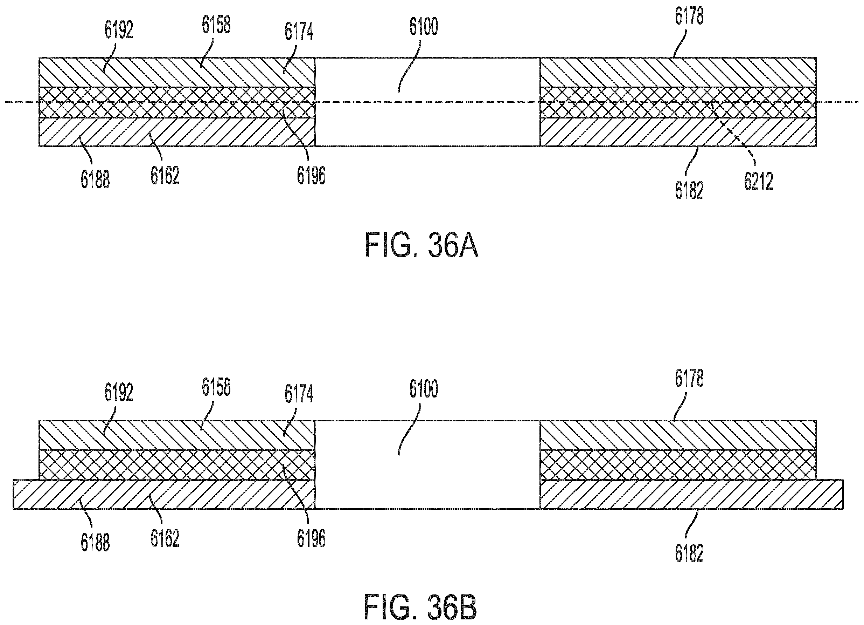

As shown in FIG. 36A, the charging terminal 6100 has a disk-shaped body 6174 which in turn forms a top surface 6178, and a bottom surface 6182 opposite the top surface 6178. The terminal 6100 also defines a centerline or centerplane 6212 oriented normal to the disk axis and positioned at the mid-point axially thereof. In the current construction, the body 6174 is formed from three axially stacked layers. A first or bottom layer 6188 is formed from electrically conductive material (e.g., metal) and forms the bottom surface 6182, the second or top layer 6192 is formed from electrically conductive material (e.g., metal) and forms the top surface 6178, and the third or insulating layer 6196 is positioned between the first layer 6188 and the second layer 6192. As a result, the top layer 6192 forms the positive electrode 6158 while the bottom layer 6188 forms the ground electrode 6162. In some embodiments, the bottom layer 6188 may extend past the top layer 6192 such that the ground electrode 6162 of the terminal 6100 can first make contact with the ground electrode plate 6096 of the charging port 6080 to safely ground the tool before the positive electrode 6158 makes contact with the positive electrode plate 6092 (see FIG. 36B). In some embodiments, the terminal 6100 may be a hollow structure forming an annular shape, wherein the three layers 6182, 6188, 6192 do not fully extend to the core 6142.

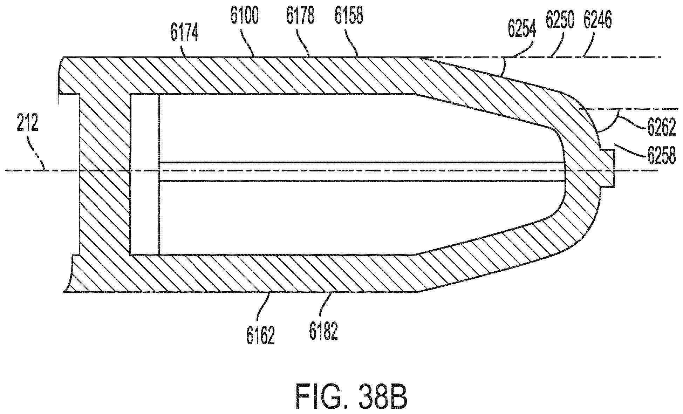

As shown in FIG. 38B, the perimeter of the disk-shaped body 6174 is tapered to improve insertion into the charging port 6080. More specifically, the tapered perimeter or tapered portion 6246 is shaped to help guide the terminal 6100 into the charging port 6080 during the docking process. In the illustrated embodiment, the tapered portion 6246 of the body 6174 includes a first portion 6250 extending radially outwardly from the body 6174 at a first angle 6254 with respect to the centerline 6212, and a second portion 6258 extending radially outwardly from the first portion 6250 at a second angle 6262 with respect to the centerline 6212 that is greater than the first angle 6254. While the illustrated tapered portion 6246 includes two portions 6250, 6258 producing two angles 6254, 6262, it is understood that in other embodiments different contours may be present. For example, in some embodiments the tapered portion 6246 may include a single continuous curve (not shown) while in other embodiments more or fewer portions with increasingly more steep angles may be present.

When assembled, the charging terminal 6100 is adjustably mounted to the core 6142 for axial movement along the length thereof. More specifically, the charging terminal 6100 is configured to move axially along the length of the core 6142 between the first end 6150 and the second end 6154 to adjust the terminal height 6102 which is generally defined as the vertical distance (e.g., taken parallel to the docking axis 6228) between the top surface 6224 and the centerline 6212 of the terminal 6100. By doing so, the centerline 6212 of the charging terminal 6100 can be adjusted to fall within the alignment window relative to the centerline 6216 of the charging port 6080 of the tool 6010 during the docking process.

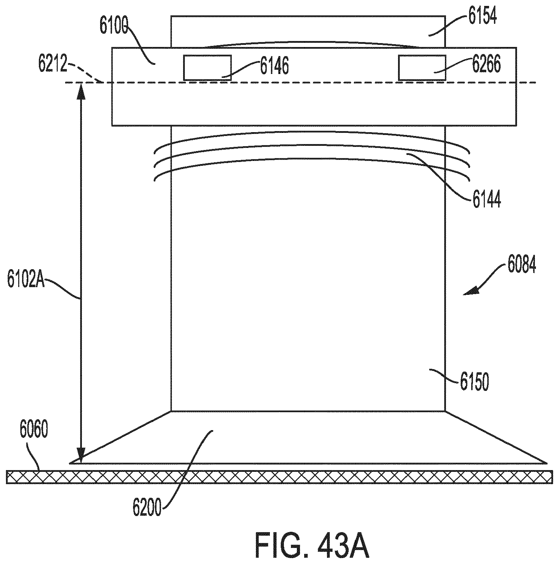

As seen in FIGS. 43A-43B, the core 6142 of the illustrated embodiment has a threaded region 6144 (e.g., a first threaded region) near the second end 6154 thereof while the internal surface of the charging terminal 6100 has a threaded region (e.g., a second threaded region), not shown. The threaded region 6144 of the core 6142 is configured to engage with the internal threaded region of the charging terminal 6100 such that rotating the terminal 6100 relative to the core 6142 causes terminal 6100 to move axially along the length of the core 6142. More specifically, rotating the terminal 6100 in a first direction (e.g., clockwise) causes the terminal 6100 to move axially toward the first end 6150 of the core 6142 causing the terminal height 6102 to decrease while rotating the terminal 6100 in a second direction (e.g., counterclockwise) opposite the first direction causes the terminal 6100 to move axially toward the second end 6154 causing the terminal height 6102 to increase. As such, the user is able to adjust the terminal height 6102 by manually rotating the terminal 6100 relative to the core 6142. In the illustrated embodiment, the threaded region 6144 of the core 6142 is disposed on only a portion of the core 6142, however in other embodiments the threaded region 6144 could extend the entire axial length of the core 6142.

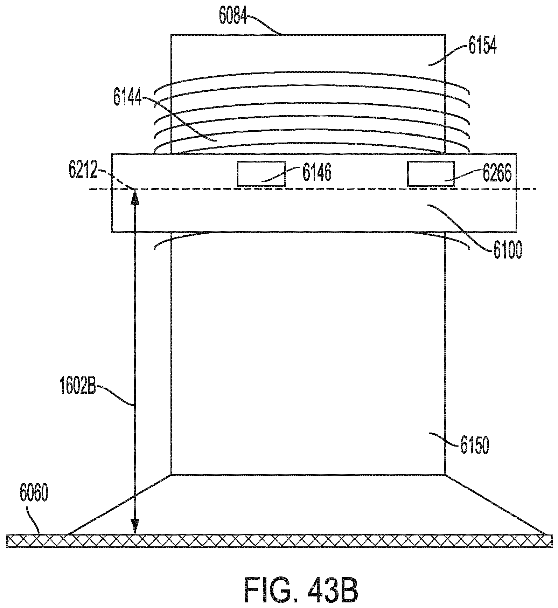

In some embodiments, the terminal 6100 is movable axially within an adjustment envelope (e.g., between a maximum terminal height 6102A, see FIG. 43A, and a minimum terminal height 6102B, see FIG. 43B). More specifically, the thread pitch of the first and second threaded regions 6144 are configured so that a pre-determined number of rotations of the terminal 6100 relative to the core 6142 causes the terminal 6100 to move from the maximum terminal height 6102A to the minimum terminal height 6102B or vise-vera. In some embodiments, the thread pitch is such that a single rotation of the terminal 6100 relative to the core 6142 causes the terminal 6100 to move from the maximum terminal height 6102A and the minimum terminal height 6102B. By limiting the number of rotations between the terminal 6100 and the core 6142 the terminal 6100 is able to undergo the entire range within the adjustment envelope while minimizing any wear and tear experienced by any wires extending between the terminal 6100 and the core 6142.

In some embodiments, one of the core 6142 and/or the terminal 6100 may include an electrical motor or actuator 6266 to automatically rotate the terminal 6100 relative to the core 6142. In such embodiments, the motor 6266 may act against a ring gear (not shown) formed into or otherwise mounted to the other of the core 6142 and the terminal 6100. During operation, the motor 6266 is configured to receive instructions from the station controller 6146 (discussed below) whereby the motor 6266 can apply a pre-determined amount of torque to position the terminal 6100 as desired.

The terminal 6100 also includes a plurality of adjustable electrical connections extending between and configured to convey electrical energy between the core 6142 and the terminal 6100 while permitting relative axial and rotational movement therebetween. More specifically, the terminal 6100 includes a plurality of electrical connectors formed into one of the terminal 6100 and the core 6142 and a corresponding conductive track formed into the other of the terminal 6100 and the core 6142 such that the connectors slide along and remain in contact with the tracks as the terminal 6100 is rotated and travels along the axial length of the core 6142. In other embodiments, long wires may be used to connect the terminal 6100 with the core 6142 that have a sufficient length to minimize the amount of "twisting" that occurs during operation.

The station controller 6146 of the charging station 6084 is in operable communication with at least the positive electrode 6158 and the ground electrode 6162 and is configured to control the flow of electrical power thereto. More specifically, the charging station 6084 is in electrical communication with a power source (e.g., an internal or external battery, and/or utility power via a plug, a solar power source, and the like) and is configured to convey electrical power to the electrodes 6158, 6162 during the battery charging operation. While not shown, the charging terminal 6100 may include additional electrodes electrically isolated from the positive and ground electrodes 6158, 6162 (discussed above) and configured to transmit additional electrical power and/or signals between charging station 6084 and the tool 6010.

In some embodiments, the station controller 6146 may be operable to communicate unliterally or bidirectionally with the tool 6010. For example, that station controller 6146 may communicate the position of the charging station 6084 relative to the tool 6010 to facilitate the tool 6010 returning to the charging station 6084 during operation. The station controller 6146 may also communicate the direction of the charging station 6084 relative to the tool 6010 to facilitate the tool 6010 returning to the charging station 6084.

In some embodiments, the station controller 6146 may also be in operable communication with the motor and/or actuator 6266 to actively control the terminal height 6102. In such embodiments, the station controller 6146 may be operable communication with one or more sensors (not shown) configured to detect the current terminal height 6102 of the terminal 6100 and, in response to the detected height 6102, may then output commands to the motor 6266 to rotate the terminal 6100 and adjust the terminal height 6102 appropriately. Furthermore, the station controller 6146 may be in operable communication with additional sensors configured to detect the current charger height 6126.

During installation, the charging station 6084 is positioned along the length of the boundary wire 6016 or within the cutting area 6014. Once the charging station 6084 is installed, the charging height 6126 of the tool 6010 is measured by the user. To do so, the user may place the tool 6010 on a flat support surface 6060 near where the charging station 6084 is installed and measure the distance between the support surface 6060 and the centerline 6216 of the charging port 6080. Although not shown, the body 6018 of the tool 6010 may also include indicia (e.g., a reference line) formed into or printed on the exterior surface thereof for the user to use as a reference while making the appropriate measurements so as to increase the overall accuracy.

With the charger height 6126 recorded, the user may then adjust the terminal height 6102 of the charging terminal 6100. To do so manually, the user may physically rotate the charging terminal 6100 relative to the core 6142 in the appropriate direction and for the appropriate number of rotations until the centerline 6212 of the terminal 6100 falls within the adjustment envelope (e.g., the centerline 6212 is within a pre-determined vertical distance of the centerline 6216 of the charging port 6080). In some embodiments, the current terminal height 6102 of the terminal 6100 may be measured by the user using a measuring stick and the like placed on the top surface 6224 of the docking pad 6200. However, in other embodiments, the core 6142 may include one or more graduations formed thereon generally representing the current terminal height 6102. In still other embodiments, the core 6142 may include a digital readout that displays the current terminal height 6102. In such embodiments, the readout may also include height recommendations based on the model and type of tool 6010 being used therewith to aid setup. In still other embodiments, the user may enter a desired terminal height 6102 into the station controller 6146 (e.g., via a remote user interface, a control pad on the charging station 6084, and the like) whereby the motor 6266 will automatically adjust the terminal 6100 to the desired terminal height 6102.

In another embodiment, the charging station 6084 and the tool 6010 may each include an indicia (not shown) to serve as a datum for locating the charging terminal 6100 relative to the tool 6010. More specifically, the user may align the indica on the charging station 6084 with corresponding indicia on the tool 6010 to align the charging terminal 6100 with the charging port 6080. By doing so, the charging station 6084 may be set up without having to measure the terminal height 6102 and the charging height 6126. The indica may include dots, references lines, datum markings, and the like. The indicia may also be printed onto the charging station 6084 and the tool 6010 or molded into the structures directly.

During use, the tool 6010 is configured to travel across the support surface 6060 and cut vegetation (e.g., grass). When the cutting operation is complete and/or the battery 6032 drops below a pre-determined charge level, the controller 6030 of the tool 6010 may instruct the tool 6010 to return to the charging station 6084 to replenish the battery 6032. The tool 6010 may then maneuver toward the charging station 6084 taking any approach vector V that falls within the approach envelope 6170. More specifically, the tool 6010 may select any approach vector V that brings the charging port 6080 into engagement with the charging terminal 6100 regardless of where the charging terminal 6100 engages the channel 6088 along the axial length thereof and regardless of the relative angular orientations of the charging terminal 6100 and the charging port 6080 so long as the necessary insertion depth 6166 is achieved.

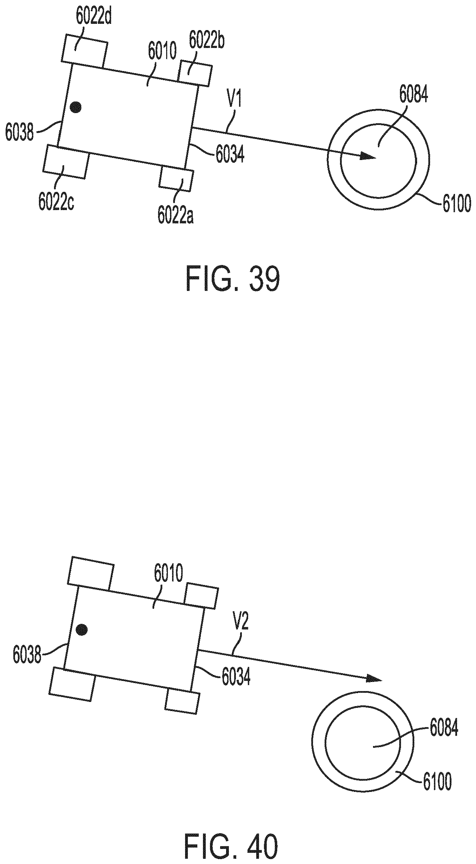

For example, in some embodiments such approach vectors V1 may include vectors traveling radially toward the terminal 6100 from any direction within an acceptable approach envelope (see FIG. 39). In other embodiments, such approach vectors V2 may include vectors offset from the terminal 6100 but falling within the approach envelope (see FIG. 40).

If the terminal height 6102 does not align with the charging height 6126 (e.g., if the charging height 6126 falls outside the adjustment envelope due to mud on the tool's wheels and the like), the tool 6010 may stop approaching the charging station 6084 and indicate that there is an error. The tool 6010 may emit an audio and/or visual signal or display an error message to indicate that the charging terminal 6100 needs to be manually adjusted into the adjustment envelope such that the terminal height 6102 matches the charging height 6126. Once the charging height 6126 and the terminal height 6102 are properly aligned (as discussed above), the tool 6010 continues to travel along the approach vector V. In some embodiments, the tool 6010 and/or the charging station 6084 may also output the desired terminal height 6102 needed to clear the error.

Upon reaching the charging station 6084, the front wheels 6022a, 6022b of the tool 6010 are forced up and over the exterior stop 6232 via the driving force applied by the rear wheels 6022c, 6022d. After traversing the stop 6232, the front wheels 6022a, 6022b then rest on the top surface 6224 of the docking pad 6200.

As the tool 6010 approaches the charging station 6084 along the approach vector V, the terminal 6100 presses against the electrode plates 6092, 6096 and biases the electrode plates 6092, 6096 toward the open position. Once in the channel 6088, the tool 6010 then continues to travel along the approach vector V advancing the terminal 6100 deeper into the channel 6088 (e.g., increasing the insertion depth 6166).

As the insertion depth 6166 increases, the ground electrode 6162 of the charging terminal 6100 engages and makes an electrical connection with the ground electrode plate 6096 of the charging port 6080 and the positive electrode 6158 of the charging terminal 6100 engages and makes an electrical connection with the positive electrode plate 6092 of the charging port 6080 (see FIG. 37A). With this connection, the tool 6010 comes to a stop and the station controller 6146 can begin the charging process (e.g., conveying electrical power to the battery 6032 of the tool 6010 via the electrodes 6092, 6096, 6158, 6162). Furthermore, due to the position of the front wheels 6022a, 6022b between the stops 6232, 6236 (e.g., within the docking recess 6204), the tool 6010 is able to maintain its relative position with respect to the terminal 6100 without having to actuate the driven wheels 6022c, 6022d.

When the charging process is complete, the controller 6030 of the tool 6010 may instruct the tool 6010 to travel away from the charging station 6084 so that the terminal 6100 is removed from the channel 6088 and the electrical connections between the electrodes 6092, 6096, 6158, 6162 severed.

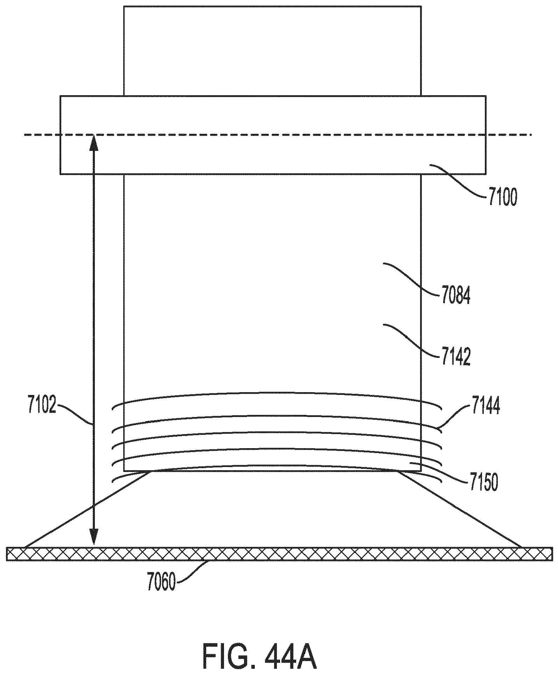

FIGS. 44A-44B illustrate another embodiment of the charging station 7084. The charging station 7084 is sustainably similar to the charging station 6084 so only differences will be discussed in detail herein. Unlike the charging station of 6084, the charging terminal 7100 is fixedly mounted to the core 7142 such that the terminal 7100 and core 7142 move together as a unit. In the illustrated embodiment, the charging terminal 7100 is fixedly coupled to the core 7142 proximate to the second end 7154 of the core 7142 while the first end 7150 of the core 7142 is rotatably connected to the docking pad 7200. More specifically, the first end 7150 of the core 7142 includes the threaded region 7144 configured to threadingly engage a corresponding threaded region (not shown) of the docking pad 7200.

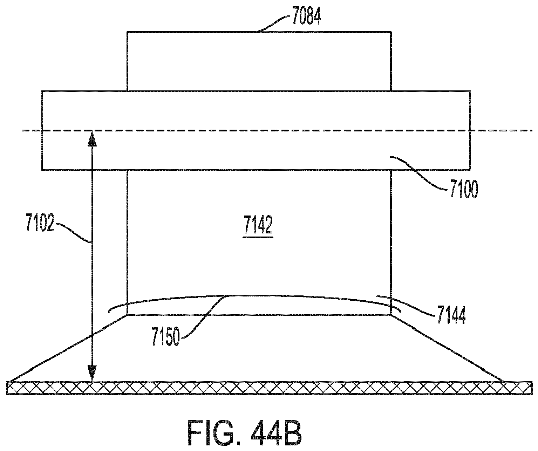

To adjust the terminal height 7102 of the charging terminal 7100, the combined core 7142 and terminal 7100 assembly is rotated relative to the docking pad 7200 (e.g., about the docking axis 6228). More specifically, rotating the core 7142 in a first direction lowers the core 7142 into the docking pad 7200 such that the terminal height 7102 of the charging terminal 7100 is decreased (FIG. 44B). In contrast, rotating the core 7142 in a second direction, opposite the first direction, extends the core 7142 from the docking pad 7200 such that the terminal height 7102 is increased (FIG. 44A).

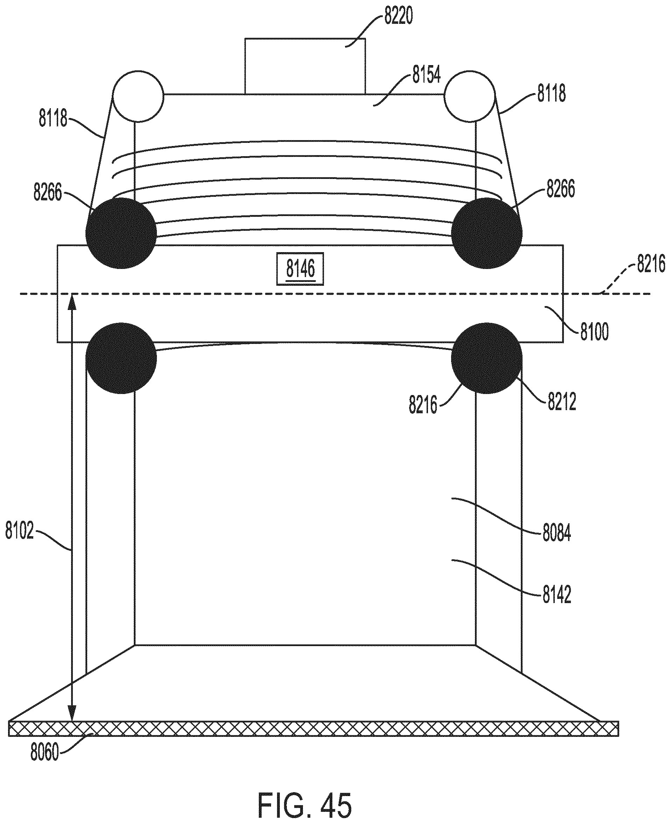

FIG. 45 illustrates another embodiment of charging station 8084. The charging station 8084 is substantially similar charging station 6084 described above, so only the differences will be described in detail herein. The charging terminal 8100 of the charging station 8084 includes an automatic adjustment mechanism 8212. The automatic adjustment mechanism 8212 includes a user interface 8220 and one or more electric motors 8266 that are configured to move the charging terminal 8100 along the axial length of the core 8142. In the illustrated embodiment, the motors 8266 are positioned so that it can apply a force (e.g., via a set of gears, pulleys, belts, linkages, and the like) to the charging terminal 8100 causing it to move axially along the length of the core 8142. In the illustrated embodiment, the motor 8266 includes a pulley system configured raise and lower the charging terminal 8100 using a series of cables 8118. In other embodiments, the motor 8266 may be in operable communication with a jack screw (not shown) to translate the charging terminal 8100 axially along the length of the core 8142 without imparting any relative rotation between the terminal 8100 and the core 8142.

The user interface 8220 of the charging station 8084 includes a plurality of buttons operable to control the automatic adjustment mechanism 8212. For example, a first button may cause the automatic adjustment mechanism 8212 to move the charging terminal 8100 upwards with the motors 8266 and increase the terminal height 8102, while a second button may cause the automatic adjustment mechanism 8212 to move the charging terminal 8100 downwards with the motors 8266 and decrease the terminal height 8102. In other embodiments, the user may be able to enter a desired terminal height 8102 into the user interface 8220 at which the adjustment mechanism 8212 will automatically place the charging terminal 8100 in the desired location.

In another embodiment, not illustrated, the user interface 8220 is located on a remote device. The remote device may be a smart phone, tablet, or surface computer. Having the user interface 8220 located on the remote device allows the user to adjust the charging terminal 8100 from a remote location.

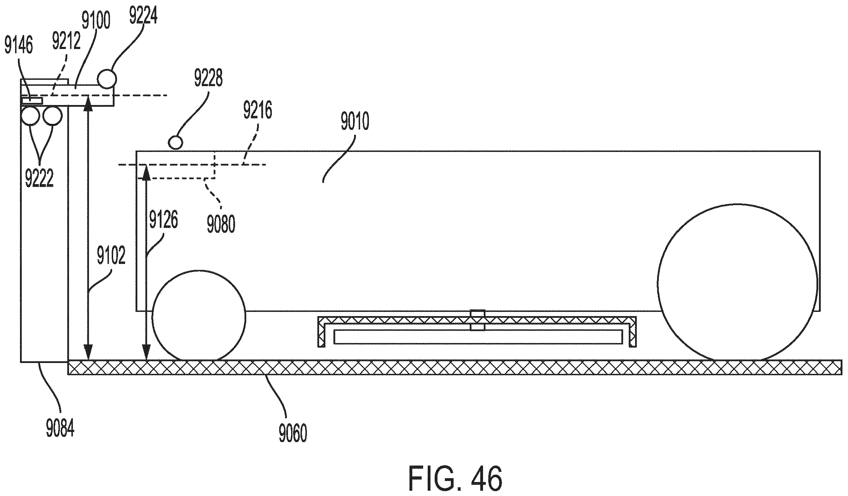

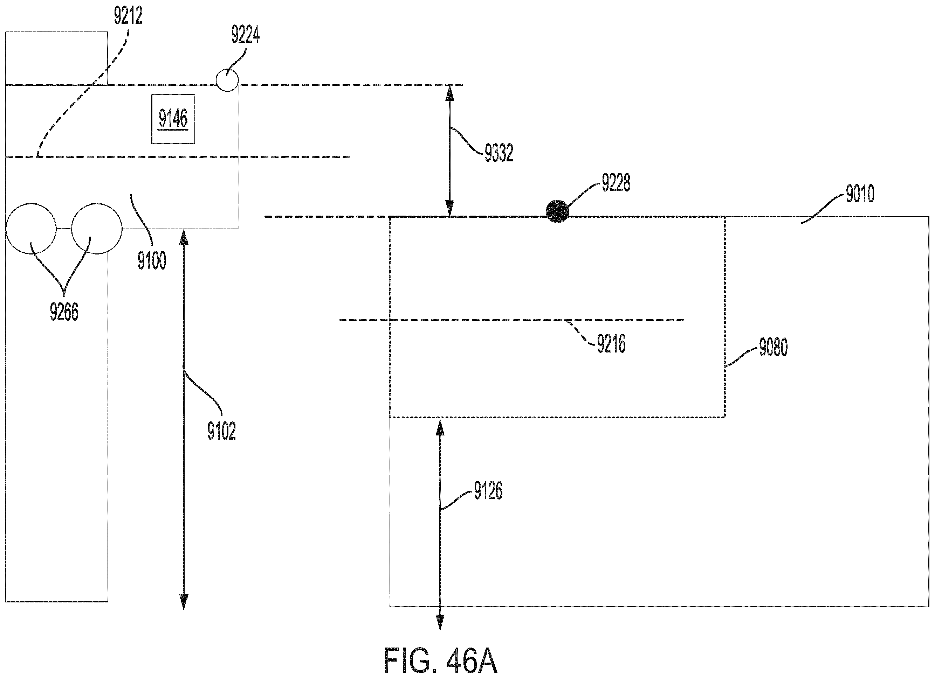

FIGS. 46-46A illustrate another embodiment of the tool 9010 and the charging station 9084. The charging port 9080 of the tool 9010 and charging station 9084 are substantially similar to the charging port 6080 and charging station 6084 described above so only the differences will be described in detail herein. The charging station 9084 has an active adjustment mechanism 9222 that automatically changes the terminal height 9102 of the charging terminal 9100 to match the charging height 9126 of the charging port 9080.

The active adjustment mechanism 9222 includes a plurality of electric motors 9266 configured to move the charging terminal 9100 with respect to the support surface 9060. The active adjustment mechanism 9222 can be configured to move the charging terminal 9100 with respect core 9142, similar to charging station 8084. The active adjustment mechanism 9222 is in communication with the station controller 9146 of the charging station 9084.

The charging station 9084 also includes one or more sensors 9224 located on the charging terminal 9100. The sensors 9224 are positioned at a known distance (e.g., a first distance) from a centerline 9212 of the charging terminal 9100. The sensors 9224 are positioned around the charging terminal 9100 such that the sensors 9224 have a 360 degrees view of cutting area 14. The sensors 9224 are in communication with the station controller 9146. The sensors 9224 may be a plurality of cameras, LIDAR, or other sensors.

The tool 9010 is similar to the tool 6010, but the tool 9010 includes a target 9228 (e.g., an indica) disposed on the body 9018 of the tool 9010. The target 9228 is positioned at a known distance (e.g., a second distance) from the centerline 9216 of the charging port 9080. The target 9228 is configured such that it can be seen and be tracked by the sensors 9224. The target 9228 may be a sensor or a mark that is visually different than the body 9018.

The station controller 9146 is in communication with the sensors 9224 and the active adjustment mechanism 9222. The station controller 9146 revies tracking information from the sensors 9224 relating to the distance of the target 9228 and the tool 9010 relative to the charging station 9084. The station controller 9146 includes a program that is operable to determine a vertical distance 9332 between the target 9228 and the sensors 9224. The station controller 9146 is operable to activate the active adjustment mechanism 9222 such that the charging terminal 9100 is moved the vertical distance thereby causing the charging terminal 9100 to be aligned with the charging port 9080.

During use, the sensors 9224 and the active adjustment mechanism 9222 are used to ensure that the terminal height 9102 of the charging terminal 9100 matches the charging height 9126 of the charging port 9080. The sensors 9224 on the charging station 9084 are configured to actively track the target 9228 disposed on the tool 9010. The sensors 9224 communicate tracking information to station controller 9146. The station controller 9146 determines the vertical distance 9332 between the sensors 9224 and the target 9228. The charging terminal 9100 is aligned with the charging port 9080 when the sensors 9224 are vertically aligned with the target 9228. If the vertical distance 9332 is greater than a predetermined threshold (e.g., 1 in), then station controller 9146 activates the active adjustment mechanism 9222. The motors 9266 of the active adjustment mechanism 9222 move the charging terminal 9100 the vertical distance 9332 such that the terminal height 9102 of the charging terminal 9100 matches the charging height 9126 of the charging port 9080 and the terminal 9100 is aligned with the charging port 9080. The sensors 9224 and the active adjustment mechanism 9222 may be configured to be operable the entire time the tool 9010 is in operation or they may only be operable when the tool 9010 is within a distance of the charging station 9084 (e.g., 3 feet).

## Claims

1. A charging station for use with a robotic tool, the charging station comprising:
a core having a first end and a second end, the first end of the core being configured to be supported on a support surface, the core defining a core axis;
a charging terminal coupled to the core, wherein the charging terminal includes a disk-shaped body extending radially outwardly from the core, wherein the charging terminal includes a lateral plane subdividing the body into a first sub-section and a second sub-section, and wherein a positive electrode is positioned on an exterior surface of the first sub-section and wherein a ground electrode is positioned on an exterior surface of the second sub-section.

2. The charging station of claim 1, wherein the charging terminal defines a terminal axis oriented normal to the lateral plane, and wherein the charging terminal includes a plurality of axially stacked portions.

3. The charging station of claim 1, wherein the charging terminal includes a portion forming a bottom surface, a second portion forming a top surface, and a third portion positioned axially between the first portion and the second portion.

4. The charging station of claim 3, wherein the first sub-section forms the top surface and wherein the second sub-section forms the bottom surface.

5. The charging station of claim 3, wherein the first portion and the second portion are formed from a conductive material, and wherein the third portion is formed from an insulating material.

6. The charging station of claim 1, wherein the charging terminal defines a terminal axis oriented normal to the lateral plane, and wherein the charging terminal includes a plurality of radially nested portions.

7. The charging station of claim 1, wherein the charging terminal defines a terminal axis oriented normal to the lateral plane, and wherein the charging terminal includes a first portion forming a top surface, a second portion forming a bottom surface, and a third portion positioned radially between the first portion and the second portion.

8. The charging station of claim 7, wherein the first portion and the second portion are formed from conductive material, and wherein the third portion is formed form an insulating material.

9. The charging station of claim 7, wherein the first portion includes an insulating coating applied to the bottom surface thereof and wherein the second portion includes an insulating coating applied to the top surface thereof.

10. A robotic tool comprising:
a body having a periphery;
one or more driven wheels mounted to the body;
a working tool mounted to the body;
a battery; and
a charging port including:
an elongated channel having an open end open to the exterior of the body, the channel defining a channel axis positioned at the cross-sectional center thereof and extending along the entire length of the channel,
a positive electrode at least partially positioned within the channel,
a ground electrode at least partially positioned within the channel, and
wherein the channel axis is curvilinear.

11. The robotic tool of claim 10, wherein the channel axis corresponds to the shape of at least a portion of the periphery of the body.

12. The robotic tool of claim 10, wherein the body includes a front end, a rear end opposite the front end, and a pair of side ends extending between the front end and the rear end, and wherein the channel axis extends along at least the front end and a portion of at least one side end of the pair of side ends.

13. The robotic tool of claim 10, wherein the cross-sectional layout of the charging port is constant along the entire axial length thereof.

14. The robotic tool of claim 10, wherein the open end of the charging port is positioned at a constant vertical charger height along the entire axial length of the channel.

15. The robotic tool of claim 10, wherein the working tool is a rotating blade.

16. A robotic tool kit, comprising:
a charging station including:
a core, and
a charging terminal coupled to the core, wherein the charging terminal includes a positive electrode and a ground electrode;
a robotic garden tool including:
a body having a periphery,
at least one driven wheel mounted to the body,
a battery, and
a charging port including an elongated channel having an open end extending along and open to the periphery of the body, wherein the charging port includes a positive electrode at least partially positioned within the channel and a ground electrode at least partially positioned within the channel; and
wherein the charging terminal is configured so that the charging terminal can be inserted anywhere along the length of the channel and still cause the positive electrode of the charging terminal to be in electrical communication with the positive electrode of the charging port and the ground electrode of the charging terminal be in electrical communication with the ground electrode of the charging port.

17. The robotic kit of claim 16, wherein the charging terminal includes a top surface and a bottom surface, and wherein one of the top surface and the bottom surface forms the positive electrode and the other of the bottom surface and the top surface forms the ground electrode.

18. The robotic kit of claim 16, wherein the charging terminal is configured so that the charging terminal can cause the positive electrode of the charging terminal to be in electrical communication with the positive electrode of the charging port and the ground electrode of the charging terminal be in electrical communication with the ground electrode of the charging port regardless of the relative angular orientations of the charging station and the robotic garden tool.

19. The robotic kit of claim 16, wherein the charging terminal is positioned a first distance from the support surface, wherein the charging port is positioned a second distance from the support surface, and wherein the first distance is the same as the second distance.

20. The robotic kit of claim 19, wherein the open end of the charging port is positioned a second distance from the support surface along the channel's entire axial length.
